# EUROPÄISCHE PATENTSCHRIFT

(11) **EP 3 928 839 B1**
(45) Veröffentlichungstag und Bekanntmachung des Hinweises auf die Patenterteilung: **26.03.2025**
(21) Anmeldenummer: 21176217.4
(22) Anmeldetag: 27.05.2021
(51) Int. Cl.: A62B 23/02, B01D 35/30

(54) **FILTEREINHEIT MIT EINEM STARREN FILTER UND EINER FLEXIBLEN UMMANTELUNG SOWIE VERFAHREN ZUR HERSTELLUNG EINES SOLCHEN FILTERS**
FILTER UNIT WITH A RIGID FILTER AND A FLEXIBLE COVER AND METHOD FOR MANUFACTURING SUCH A FILTER
UNITÉ DE FILTRE DOTÉE D'UN FILTRE RIGIDE ET D'UNE GAINE FLEXIBLE, AINSI QUE PROCÉDÉ DE FABRICATION D'UN TEL FILTRE

(30) Priorität: 02.06.2020 DE 102020114622
(43) Veröffentlichungstag der Anmeldung: 29.12.2021
(73) Patentinhaber: Dräger Safety AG & Co. KGaA, 23560 Lübeck (DE)
(72) Erfinder: Junk, Andreas, 23558 Lübeck (DE); Kirmse, Sören, 23558 Lübeck (DE); Müller, Rolf, 23558 Lübeck (DE); Lorenzen, Ludwig, 23558 Lübeck (DE); Erhardt, Tim, 23558 Lübeck (DE)
(74) Vertreter: Meyer-Gramann, Klaus Dieter

(56) Entgegenhaltungen:
- DE-A1- 10 021 582
- DE-B4- 10 220 672
- US-A- 5 817 263

## Beschreibung

Die Erfindung betrifft eine Filtereinheit, welche mindestens ein Gas und / oder Partikel aus einem Gasgemisch, insbesondere aus Atemluft, herauszufiltern vermag, sowie zwei Verfahren zur Herstellung einer solchen Filtereinheit.

In einer Anwendung ist eine solche Filtereinheit ein auswechselbarer Bestandteil einer Atemschutzmaske. Diese Atemschutzmaske umfasst die eigentliche Maske, die ein Mensch vor dem Gesicht trägt, eine Halterung für die Maske, beispielsweise ein Kopfband, sowie mindestens eine Filtereinheit, bevorzugt zwei Filtereinheiten. Typischerweise lässt sich eine Filtereinheit in ein Schraubgewinde oder Bajonettanschluss der Maske einschrauben und wieder herausschrauben und dadurch austauschen. Die oder jede Filtereinheit filtert mindestens ein Gas, Partikel und / oder Grobstaub aus der eingeatmeten Atemluft heraus und schützt dadurch die Lunge und die Atemwege des Menschen, der die Atemschutzmaske trägt. Eine derartige Atemschutzmaske wird beispielsweise in WO 2019 / 233 708 A1 beschrieben.

Die Filtereinheit umfasst mindestens einen Filter, welcher ein Gas und/oder die Partikel aufnimmt. Bekannt geworden ist ein Filter in Form eines Monolith, der aus Aktivkohle hergestellt ist und mindestens ein Gas aus einem Gasgemisch herauszufiltern vermag. Mehrere parallele Kanäle führen durch den Filter. Ein solcher Filter wird in DE 10 2015 012 410 A1 beschrieben.

Eine Filtereinheit mit einem relativ starren Filter wird auch in DE 100 21 582 B4 in DE 102 20 672 B4 und in DE 103 04 216 B3 beschrieben.

Der Erfindung liegt die Aufgabe zugrunde, eine Filtereinheit zum Herausfiltern von mindestens einem Gas und / oder Partikeln aus einem Gasgemisch, insbesondere aus Atemluft, bereitzustellen, wobei die Filtereinheit sich mit größerer Betriebssicherheit als bekannte Filtereinheiten verwenden lässt. Weiterhin liegt der Erfindung die Aufgabe zugrunde, ein Verfahren zum Herstellen einer solchen Filtereinheit bereitzustellen.

Die Aufgabe wird durch eine Filtereinheit mit den Merkmalen des Anspruchs 1 sowie durch ein Verfahren mit den Merkmalen des Anspruchs 13 gelöst. Vorteilhafte Ausgestaltungen sind in den Unteransprüchen angegeben. Vorteilhafte Ausgestaltungen der erfindungsgemäßen Filtereinheit sind, soweit sinnvoll, auch vorteilhafte Ausgestaltungen eines erfindungsgemäßen Verfahrens und umgekehrt.

Im Folgenden wird ein Mensch, der eine erfindungsgemäße Filtereinheit verwendet, um die eingeatmete Atemluft zu filtern, als "der Träger" der Filtereinheit bezeichnet.

Die erfindungsgemäße Filtereinheit ist dazu ausgestaltet, mindestens ein Gas und / oder Partikel aus einem Gasgemisch herauszufiltern, optional mehrere unterschiedliche Gase, während dieses Gasgemisch durch die Filtereinheit fließt. Das Gasgemisch kann homogen oder heterogen sein und ist insbesondere Atemluft, welcher schädliche Gase und feste Partikel enthalten kann.

Die erfindungsgemäße Filtereinheit umfasst
- einen Filter,
- eine Ummantelung aus einem elastisch verformbaren Material und
- eine Abdeckung aus einem starren Material.

Die Filtereinheit stellt eine Einströmseite und eine Ausströmseite bereit. Wenn ein Gasgemisch, aus dem mindestens ein Gas und / oder Partikel herausgefiltert werden sollen, durch die Filtereinheit fließt, so fließt dieses Gasgemisch von der Einströmseite durch die Filtereinheit und hierbei durch den Filter hindurch zu der Ausströmseite. Die Einströmseite weist eine einströmseitige Öffnung auf, die Ausströmseite eine ausströmseitige Öffnung. Das Gasgemisch strömt durch die einströmseitige Öffnung in die Filtereinheit hinein, fließt durch den Filter, wobei der Filter aus dem Gasgemisch das oder mindestens ein Gas oder Partikel herausfiltert, und verlässt gefiltert die Filtereinheit durch die ausströmseitige Öffnung.

Der Filter ist als ein starrer Körper ausgestaltet, erstreckt sich entlang einer Mittelachse und weist eine Mantelfläche auf. Die Mantelfläche umgibt mit einem radialen Abstand die Mittelachse. Bevorzugt hat der Filter die Form eines Zylinders oder eines Kegelstumpfs oder einer Säule oder eines Pyramidenstumpfs mit einer n-eckigen Querschnittsfläche, n >= 3. Auch andere geometrische Formen sind möglich.

Der Filter ist dazu ausgestaltet, mindestens ein Gas und / oder Partikel aus dem Gasgemisch, welches durch den Filter fließt, herauszufiltern, optional mehrere Gase.

Die Ummantelung der Filtereinheit umgibt die Mantelfläche des Filters, bevorzugt die gesamte Mantelfläche. Bevorzugt liegt die Ummantelung an der Mantelfläche an. Die Ummantelung ist aus einem verformbaren und damit nachgiebigen Material, insbesondere aus einem plastischen und / oder elastischen Material, hergestellt. Dadurch vermag die Ummantelung kinetische Energie aufzunehmen, welche von außen auf die Mantelfläche einwirkt und insbesondere von einem Stoß verursacht wird. Bevorzugt vermag die Ummantelung sich reversibel zu verformen, wenn kinetische Energie von außen einwirkt. Die Ummantelung umgibt die einströmseitige Öffnung.

Die Abdeckung grenzt an dem zur Ausströmseite hin zeigenden Ende der Ummantelung an die Ummantelung an. Die Abdeckung umgibt die ausströmseitige Öffnung.

Erfindungsgemäß ist die ausströmseitige Öffnung in die starre Abdeckung eingelassen. Dieses Merkmal ermöglicht es, eine Koppeleinheit mit der Abdeckung zu verbinden. Insbesondere lassen sich ein Schraubgewinde oder einen Bajonettanschluss, und / oder die Abdeckung so ausgestalten, dass sie die Koppeleinheit umfassen und bereitstellen. Mithilfe dieser Koppeleinheit lässt sich die Filtereinheit mit einer Maske oder mit einem sonstigen Gerät, welches die Filtereinheit trägt, verbinden, und zwar bevorzugt lösbar verbinden. Die Filtereinheit wird an einer bestimmten Stelle am Gerät gehalten. Die mechanische Stabilität wird erhöht, weil die Abdeckung aus einem starren Material ist.

Erfindungsgemäß ist der Filter als ein starrer Körper ausgestaltet. In vielen Fällen setzt ein als starrer Körper ausgestalteter Filter der Atmung eines Menschen, der die Filtereinheit benutzt, einen relativ geringen Widerstand entgegen, insbesondere einen geringeren Widerstand als ein anders aufgebauter Filter mit ähnlicher Filterleistung. Insbesondere lässt sich als der Filter ein starrer Körper aus Aktivkohle verwenden - allgemeiner: ein starrer Körper aus einem Material, das Aktivkohle umfasst. Weil ein solcher Filter in Form eines starren Körpers der Atmung einen relativ geringen Widerstand entgegensetzt, wird die Atemmuskulatur des Trägers der Filtereinheit weniger stark beansprucht und ermüdet erst nach einer längeren Zeit, verglichen mit anderen möglichen Filtern mit ähnlicher Filterleistung. Außerdem hat ein solcher starrer Filter in manchen Fällen ein geringeres Gewicht als ein anders ausgestalteter Filter mit ähnlicher Filterleistung.

Insbesondere wegen des geringeren Atemwiderstands führt die erfindungsgemäße Filtereinheit dazu, dass der Träger sich länger in einem Raum, dessen Luft mit mindestens einem schädlichen Gas und / oder mit Partikeln belastet ist, aufhalten kann und / oder seltener die Filtereinheit wechseln muss. Dennoch vermag der erfindungsgemäße starre Filter eine geforderte Förderleistung tatsächlich zu erzielen.

In vielen Fällen lässt ein Filter, der als ein starrer Körper ausgestaltet ist, sich leichter herstellen und / oder handhaben als eine Filterung mithilfe von Schüttgut.

In einer Ausgestaltung ist der starre Filter als ein einziger starrer Körper ausgestaltet. In einer anderen Ausgestaltung besteht der starre Filter aus einer Abfolge von einzelnen starren Körpern. Die Ausgestaltung mit der Abfolge ermöglicht es, dass die einzelnen Körper insgesamt wenigstens zwei unterschiedliche Eigenschaften aufweisen und der starre Filter daher unterschiedliche Gase aus einem Gasgemisch herauszufiltern vermag oder unterschiedliche Filterverfahren anwendet. Beides erhöht in vielen Fällen die Zuverlässigkeit.

Ein Nachteil, den ein Filter in Form eines starren Körpers häufig aufweist, ist der, dass dieser starre Filter bei mechanischer Krafteinwirkung relativ leicht brechen kann. Diese mechanische Krafteinwirkung tritt beispielsweise dann auf, wenn die Filtereinheit auf den Boden fällt oder während der Benutzung oder während eines Transports gegen ein starres Objekt stößt.

Die Gefahr, dass der Filter der erfindungsgemäßen Filtereinheit mechanisch beschädigt wird, wird einerseits durch die Ummantelung reduziert, welche erfindungsgemäß die Mantelfläche sowie die einströmseitige Öffnung des Filters umgibt und aus einem reversibel verformbaren Material ist. Die Ummantelung vermag aufgrund ihrer Verformbarkeit bis zu einem gewissen Grad kinetische Energie aufzunehmen und in einer Ausgestaltung an die starre Abdeckung und damit an eine Koppelstelle weiterzuleiten. Andererseits wird die Gefahr einer Beschädigung dadurch reduziert, dass die ausströmseitige Öffnung erfindungsgemäß mit einer Abdeckung aus einem starren Material umgeben ist.

Die flexible Ummantelung um die Mantelfläche des Filters schützt einerseits den Filter in vielen Fällen davor, dass ein Teil des Filters abbricht oder der Filter zerbricht, insbesondere wenn die Filtereinheit auf den Boden fällt. Andererseits schützt die Ummantelung in Verbindung mit der Abdeckung den Filter vor chemischen Umgebungseinflüssen, insbesondere vor Wasser und Wasserdampf, und bis zu einem gewissen Grade auch vor thermischen Umgebungseinflüssen, und zwar sowohl bei direkter Beflammung als auch bei großer Hitze, insbesondere bei einem Einsatz der Filtereinheit in einer verrauchten oder qualmenden Umgebung.

Bevorzugt ist der Filter aus einem Material hergestellt, welches Aktivkohle umfasst. Bevorzugt ist eine Vielzahl von zueinander parallelen Kanälen durch den Filter geführt. Diese Kanäle verbinden die Einströmseite mit der Ausströmseite. Ein Gasgemisch fließt durch diese Kanäle hindurch, und hierbei werden mindestens ein Gas und / oder Partikel herausgefiltert. Der Filter kann imprägniert sein.

Erfindungsgemäß erstreckt sich der Filter entlang einer Mittelachse. Die Mantelfläche umgibt diese Mittelachse. Jeder Querschnitt durch den Filter senkrecht zur Mittelachse hat die Form eines Kreises oder einer Ellipse oder eines n-Ecks mit n größer gleich 3. Möglich ist, dass der Filter entlang der Mittelachse stets die gleiche Querschnittsfläche aufweist oder aber eine Querschnittsfläche, die sich in eine Richtung von der Einströmseite zur Ausströmseite vergrößert.

Erfindungsgemäß vermag die Ummantelung kinetische Energie aufzunehmen und ist aus einem elastischen Material. Bevorzugt hat die Ummantelung eine federnde Wirkung und verformt sich daher reversibel, wenn von außen ein mechanischer Impuls auf die Ummantelung einwirkt. Kinetische Energie wird absorbiert, wenn die federnd ausgestaltete Ummantelung gegen die Federkraft zusammengedrückt wird. Bevorzugt dehnt die Ummantelung sich aufgrund der Federkraft wieder aus und nimmt besonders bevorzugt wieder die alte Form an, wenn der mechanischer Impuls nicht mehr einwirkt.

In einer Ausgestaltung bleibt die Härte der Ummantelung in eine Richtung von der Mantelfläche bis zur Mittelachse gleich. In einer anderen Ausgestaltung nimmt die Härte der Ummantelung in Richtung auf die Mittelachse des Filters ab. Oder die Elastizität der Ummantelung nimmt in Richtung auf die Mittelachse des Filters zu. Diese Ausgestaltung führt in vielen Fällen zu einem noch besseren mechanischen Schutz des starren Filters.

Bevorzugt weist die Ummantelung eine Dicke von mindestens 0,1 cm, besonders bevorzugt von mindestens 0,5 cm, insbesondere von mindestens 1 cm, auf. Unter der Dicke wird die geringste Abmessung der Ummantelung in eine Richtung senkrecht auf die Mittelachse des Filters verstanden. Eine so dicke Ummantelung vermag den starren Filter in vielen Fällen besser vor einer mechanischen Beschädigung zu schützen als eine dünnere Ummantelung.

Möglich ist, dass die Dicke der Ummantelung über die Ausdehnung der Ummantelung variiert, insbesondere weil der starre Filter von einer idealen geometrischen Form abweicht, beispielsweise kein idealer Zylinder ist. In diesem Fall wird unter der Dicke, die bevorzugt größer oder gleich 0,1 cm ist, die minimale Abmessung der Ummantelung in eine Richtung senkrecht auf der Mittelachse des Filters verstanden.

Erfindungsgemäß erstreckt sich der als ein starrer Körper ausgestaltete Filter entlang einer Mittelanchse und umfasst eine Mantelfläche, die Mittelachse umgibt. Bevorzugt erstreckt sich diese Mantelfläche von einer einströmseitigen Stirnfläche zu einer ausströmseitigen Stirnfläche. Das Gasgemisch strömt von der einströmseitigen Stirnfläche zu der ausströmseitigen Stirnfläche. Jede Stirnfläche kann senkrecht oder schräg auf der Mittelachse stehen. Die beiden Stirnflächen können parallel oder schräg zueinander angeordnet sein.

In einer Ausgestaltung umgibt und bedeckt die Ummantelung nur die Mantelfläche des Filters und lässt beide Stirnseiten frei. Bevorzugt erstreckt sich die Ummantelung entlang der gesamten Länge der Mantelfläche. In einer anderen Ausgestaltung bedeckt die Ummantelung nicht nur die Mantelfläche, sondern zusätzlich einen Bereich der einströmseitigen Stirnfläche des Filters. Die Ummantelung lässt die einströmseitige Öffnung frei und umgibt diese einströmseitige Öffnung nach Art eines Kragens. Diese Ausgestaltung führt in vielen Fällen zu einer besseren Verbindung zwischen der Ummantelung und dem starren Filter oder zwischen der Ummantelung und einem optionalen zusätzlichen Partikelfilter, der vor der einströmseitigen Stirnfläche des starren Filters angeordnet ist. In vielen Fällen stützt diese Ausgestaltung noch besser die Kante zwischen der Mantelfläche und der einströmseitigen Stirnfläche des Filters.

In einer Fortbildung der beiden oben beschriebenen Ausgestaltungen steht die Ummantelung über die einströmseitige Stirnfläche über. Die Abmessung der Ummantelung in eine Richtung parallel zur Mittelachse ist also größer als die Abmessung der Mantelfläche des Filters. Weil die Ummantelung übersteht, ist die Gefahr weiter reduziert, dass der ummantelte starre Filter beschädigt wird. Die überstehende Ummantelung vermag bis zu einem gewissen Grad auch dann kinetische Energie aufgrund eines mechanischen Impulses zu absorbieren, wenn dieser mechanische Impuls auf die einströmseitige Stirnfläche gerichtet ist. Ein solcher Impuls kann beispielsweise dann auftreten, wenn die Filtereinheit mit der einströmseitigen Stirnfläche nach unten voraus auf den Boden fällt.

Erfindungsgemäß umfasst die Filtereinheit eine starre Abdeckung und eine nachgiebige Ummantelung. In einer Ausgestaltung ist die Abdeckung mechanisch mit der Ummantelung verbunden. Beispielsweise verbindet eine stoffschlüssige Verbindung, insbesondere eine Klebeverbindung, die Abdeckung mit der Ummantelung.

In einer anderen Ausgestaltung umfasst die Filtereinheit zusätzlich ein starres Gehäuse. Die nachgiebige Ummantelung befindet sich zwischen der Mantelfläche des starren Filters und dem starren Gehäuse. Bevorzugt füllt die Ummantelung den gesamten Bereich zwischen dem Filter und dem starren Gehäuse aus, besonders bevorzugt entlang der gesamten Mantelfläche des Filters. Die starre Abdeckung ist mit dem starren Gehäuse mechanisch verbunden. In dieser Ausgestaltung vermag das starre Gehäuse mechanische Impulse aufzunehmen, welche parallel oder schräg zur Mittelachse des Filters auf die Filtereinheit auftreffen, und an die Abdeckung weiterzuleiten. Das starre Gehäuse schützt weiterhin in vielen Fällen die Ummantelung vor mechanischen und chemischen Einflüssen von außen. Bevorzugt ist die Dicke des starren Gehäuses geringer als die Dicke der nachgiebigen Ummantelung. Das starre Gehäuse kann genau wie die Ummantelung über die Einströmseite überstehen. Bevorzugt umgibt das starre Gehäuse die gesamte Mantelfläche der Ummantelung.

**In** einer Ausgestaltung umfasst die Filtereinheit zusätzlich eine Folie. Diese Folie umgibt diejenige Außenseite der Ummantelung, die vom Filter abgewandt ist. In einer Ausgestaltung ist die Folie direkt auf die Ummantelung aufgebracht, in einer anderen Ausgestaltung außen auf das optionale starre Gehäuse. Bevorzugt umgibt die Folie die gesamte Ummantelung oder wenigstens denjenigen Teil der Ummantelung, der die Mantelfläche des Filters umgibt, bzw. das gesamte Gehäuse. Die Ummantelung und das optionale starre Gehäuse befinden sich also zwischen dem Filter und der Folie. Die Dicke der Folie ist bevorzugt geringer als die Dicke der Ummantelung und auch geringer als die Dicke des optionalen starren Gehäuses.

Die Folie lässt sich so ausgestalten, dass sie wasserabweisend ist und / oder andere Chemikalien, welche für den Filter schädlich sein können, abweist. Die Folie kann aus einem schwer entflammbaren Material hergestellt sein und dadurch die Gefahr verringern, dass der Rest der Filtereinheit entflammt, d.h. die Folie kann als ein Flammschutz fungieren. Auf die Folie lässt sich eine Kennzeichnung aufbringen, beispielsweise eine Kennzeichnung, die eine bestimmte Filtereinheit von allen anderen Filtereinheiten einer Menge von Filtereinheiten unterscheidet, oder eine Kennzeichnung, die Randbedingungen für die Anwendung der Filtereinheit festlegt, z.B. eine maximale Nutzungsdauer oder maximale Umgebungstemperatur oder maximale Umgebungsfeuchtigkeit. Die Folie kann Licht reflektieren und / oder fluoreszieren und dadurch auch in einer dunklen Umgebung leuchten. Dies erleichtert es einerseits einem Träger, die Filtereinheit zu finden, um sie anzuschrauben, und andererseits, den Träger der Filtereinheit zu finden. Die Folie kann auch Licht und sonstige elektromagnetische Wellen absorbieren und dadurch verhindern, dass der Träger gesehen wird.

Anstelle einer Folie kann auch eine Farbschicht oder Lackschicht aufgetragen sein, die eine entsprechende Wirkung erzielt.

Das Gasgemisch, beispielsweise die Atemluft, durchströmt die Filtereinheit von der Einströmseite zu der Ausströmseite. In einer Ausgestaltung fließt das Gasgemisch zunächst durch einen Partikelfilter, der bevorzugt aus Papier hergestellt ist, und erreicht dann den starren Filter. Der starre Filter ist also zwischen dem Papierfilter und der Abdeckung angeordnet. Der Partikelfilter filtert aus dem Gasgemisch Partikel heraus, sodass diese Partikel nicht den starren Filter erreichen. Bevorzugt überdeckt der Partikelfilter die gesamte einströmseitige Stirnseite des Filters, sodass Partikel nicht den Partikelfilter umgehen und dann den starren Filter erreichen können.

Die Ausgestaltung mit den Partikelfilter zusätzlich zu dem starren Filter reduziert die Gefahr, dass Partikelfilter den Anwender erreichen, reduziert die Gefahr, dass Partikel im Gasgemisch den Träger erreichen, was diesen gesundheitlich gefährden kann, und erspart die Notwendigkeit, dass der starre Filter aus dem Gasgemisch Partikel herausfiltern kann. Die Ausgestaltung, dass der Partikelfilter flussaufwärts vor dem starren Filter angeordnet ist, reduziert die Gefahr, dass Partikel den starren Filter zu setzen.

In einer Ausgestaltung umfasst die Filtereinheit zusätzlich einen Griffschutz. Dieser Griffschutz ist vor der einströmseitigen Öffnung angebracht und ist mit der Ummantelung oder mit dem optionalen starren Gehäuse verbunden, bevorzugt durch eine stoffschlüssige Verbindung. Der starre Filter befindet sich also zwischen dem Griffschutz und der starren Abdeckung. Der Griffschutz verhindert, dass ein Benutzer durch die einströmseitige Öffnung hindurch in die Filtereinheit eingreift und die einströmseitige Stirnfläche des Filters berührt, was beispielsweise unbeabsichtigt beim Aufsetzen oder Abnehmen der Filtereinheit geschehen kann. Außerdem reduziert der Griffschutz die Gefahr, dass der Filter beschädigt wird, wenn die Filtereinheit so gegen einen Gegenstand stößt, dass der Gegenstand auf die einströmseitige Stirnfläche des Filters trifft. Somit verhindert der Griffschutz, dass der Filter mechanisch durch einen Eingriff durch die einströmseitige Öffnung hindurch beschädigt wird. Der Griffschutz umfasst bevorzugt ein Gitter, durch welches hindurch das zu reinigende Gasgemisch strömen kann. Bevorzugt tritt ein Abstand zwischen dem Griffschutz und der einströmseitigen Stirnfläche des starren Filters auf.

Der optionale Partikelfilter befindet sich zwischen den Griffschutz und dem starren Filter. In einer Ausgestaltung ist der Partikelfilter auf die Innenseite des Griffschutzes aufgebracht und / oder wird von Griffschutz in einer gewünschten Position relativ zum starren Filter gehalten.

Die Ausgestaltung mit dem Griffschutz lässt sich mit der Ausgestaltung kombinieren, dass die Ummantelung über die einströmseitige Stirnfläche des Filters übersteht. Wenn der Griffschutz mit der überstehenden Ummantelung oder mit einem optionalen Gehäuse, das ebenfalls übersteht, verbunden ist, tritt ein Abstand zwischen dem Griffschutz und dem starren Filter auf. Diese Ausgestaltung reduziert weiter die Gefahr, dass der starre Filter beschädigt wird.

In einer Ausgestaltung umfasst die Filtereinheit zusätzlich eine Koppeleinheit, insbesondere ein Innengewinde oder ein Außengewinde oder einen Bajonettanschluss. Mithilfe dieser Koppeleinheit lässt sich die Filtereinheit mit einem weiteren Gerät verbinden, insbesondere mit einer Gesichtsmaske oder sonstigen Maske oder mit einer Fördereinheit für das Gasgemisch, und zwar bevorzugt lösbar verbinden. Die Koppeleinheit gehört zur starren Abdeckung oder ist mit der Abdeckung fest verbunden und ist bevorzugt ebenfalls starr. Die ausströmseitige Öffnung führt bevorzugt durch die Abdeckung sowie durch die Koppeleinheit hindurch.

Erfindungsgemäß sind die Abdeckung sowie die optionale Koppeleinheit aus einem starren Material hergestellt. Die Abdeckung trägt die Ummantelung aus dem verformbaren Material. Diese Ausgestaltung erhöht die mechanische Stabilität der Filtereinheit. Die Abdeckung und die Koppeleinheit können ein einziges Bauteil bilden oder zwei Bauteile sein, die fest miteinander verbunden sind.

Erfindungsgemäß ist die Ummantelung stoffschlüssig mit dem starren Filter verbunden. Diese Ausgestaltung reduziert die Gefahr, dass der starre Filter sich in unerwünschter Weise relativ zu der Ummantelung bewegt. Möglich ist, dass die Ummantelung auch stoffschlüssig mit dem starren Gehäuse verbunden ist. Eine Relativbewegung des Filters könnte auch zu einer unerwünschten Bewegung des Filters relativ zu der starren Abdeckung oder dem starren Gehäuse führen und den Filter beschädigen. Die stoffschlüssige Verbindung ist an der Mantelfläche hergestellt, und zwar an der gesamten Mantelfläche oder wenigstens an einem Bereich der Mantelfläche. Möglich ist auch, dass die Ummantelung vom Filter gedehnt wird, daher bestrebt ist, sich zusammenzuziehen, und dadurch den Filter hält.

Die Erfindung betrifft weiterhin ein Verfahren, um eine erfindungsgemäße Filtereinheit herzustellen.

Gemäß dem erfindungsgemäßen Herstellungsverfahren wird ein formgebender Körper verwendet, der einen Hohlraum bereitstellt. Eine umlaufende Innenwand des formgebenden Körpers definiert und begrenzt den Hohlraum.

Das Herstellungsverfahren mit dem formgebenden Körper umfasst die folgenden Schritte:
- Ein Filter wird bereitgestellt. Dieser Filter ist als ein starrer Körper ausgestaltet und ist insbesondere aus einem Material hergestellt, welches Aktivkohle umfasst. Der Filter erstreckt sich entlang einer Mittelachse und weist eine Mantelfläche und zwei Stirnflächen auf. Der Filter vermag mindestens ein Gas und / oder Partikel aus einem Gasgemisch, welches durch den Filter fließt, herauszufiltern.
- Außerdem wird eine Abdeckung aus einem starren Material bereitgestellt.
- Der starre Filter wird in den Hohlraum verbracht, der von dem formgebenden Körper bereitgestellt wird.
- Der formgebende Körper und der Filter sind so ausgestaltet und der Filter wird so in den Hohlraum verbracht, dass der Hohlraum den gesamten Filter aufnehmen kann und zwischen der Mantelfläche des Filters und der umlaufenden Innenwand des formgebenden Körpers ein umlaufender Spalt auftritt.
- **In** diesen Spalt zwischen der Mantelfläche und dem formgebenden Körper wird ein fließfähiges Material verbracht. Beispielsweise wird ein Schüttgut in den Spalt hineingeschüttet, oder ein flüssiges oder zähflüssiges Material fließt in den Spalt. Das fließfähige Material im Spalt umgibt nach dem Verbringen die Mantelfläche des Filters, und zwar vollständig oder wenigstens teilweise.
- Das fließfähige Material im Spalt härtet aus, und zwar vollständig oder wenigstens teilweise. Möglich ist also, dass das fließfähige Material auch nach dem teilweisen Aushärten noch bis zu einem gewissen Grade fließfähig ist. Möglich ist, dass das fließfähige Material sich beim Aushärten ausdehnt oder auch zusammenzieht.
- Nach dem Aushärten bildet das fließfähige Material eine Ummantelung aus einem nachgiebigen Material, insbesondere aus einem plastischen und / oder elastischen Material. Diese Ummantelung umgibt die Mantelfläche des Filters, und zwar bevorzugt vollständig.
- Möglich ist, dass die Ummantelung über eine Stirnfläche des Filters übersteht. An den beiden Stirnflächen des Filters lässt die Ummantelung jeweils eine Öffnung frei. Diese Öffnungen fungieren als die einströmseitige bzw. die ausströmseitige Öffnung. Eine solche Öffnung kann die gesamte Stirnfläche oder nur einen Teil der Stirnfläche freigeben.
- Bevorzugt verbindet sich durch das Aushärten das fließfähige Material stoffschlüssig mit der Mantelfläche des Filters. Möglich ist auch, dass das fließfähige Material sich beim Aushärten zusammenzieht und dadurch den Filter hält. Diese Ausgestaltungen können miteinander kombiniert sein.
- Nachdem das fließfähige Material vollständig oder wenigstens teilweise ausgehärtet ist, entsteht ein Werkstück, welches den starren Filter und die Ummantelung umfasst. Die Abdeckung wird mit diesem Werkstück mechanisch verbunden. Nach dem mechanischen Verbinden zeigt die ausströmseitige Stirnfläche des Filters zur Abdeckung hin.

Der Filter, die Ummantelung um die Mantelfläche des Filters und die mit der Ummantelung verbundene Abdeckung gehören zu der erfindungsgemäß hergestellten Filtereinheit.

Dieses Herstellungsverfahren ermöglicht es, den Filter, die Abdeckung und das fließfähige Material separat voneinander herzustellen, auch an verschiedenen Orten und mit einem jeweils angepassten Herstellungsverfahren. In vielen Fällen ist diese Herstellung leichter, als wenn erst in der Ummantelung ein Filter aus einem starren Körper hergestellt werden müsste.

Erfindungsgemäß verbindet sich das fließfähige Material beim Aushärten bis zu einem gewissen Grad mit dem Material des Filters, sodass die Ummantelung an der Mantelfläche stoffschlüssig mit dem Filter verbunden ist, und zwar vollständig oder wenigstens bereichsweise. Das fließfähige Material übt nur eine relativ geringe mechanische Einwirkung auf den Filter in dem formgebenden Körper aus, wenn das fließfähige Material in den Spalt verbracht wird. Daher ist die Gefahr relativ gering, dass der Filter beim Einfüllen des fließfähigen Materials beschädigt wird.

Das fließfähige Material, welches in den vom formgebenden Körper bereitgestellten Hohlraum verbracht wird, passt sich an die Abmessungen und die Geometrie des Filters und denen des formgebenden Körpers an. Nicht erforderlich ist, den formgebenden Körper genau an die Geometrie und die Abmessungen des Filters anzupassen. Weiterhin ist es nicht erforderlich, vorab eine passende Ummantelung herstellen und bereitstellen zu müssen.

Dieses Herstellungsverfahren ermöglicht es, in einem einzigen Herstellungsvorgang eine relativ große Menge von fließfähigem Material herzustellen oder bereitzustellen und aus dieser relativ großen Menge die Ummantelungen für mehrere erfindungsgemäße Filtereinheiten herzustellen. Dadurch, dass das fließfähige Material im Spalt wenigstens teilweise aushärtet, entsteht ein Werkstück, welches den starren Filter und die Ummantelung um den starren Filter umfasst.

In einer Fortbildung dieser Ausgestaltung wird dieses Werkstück aus dem formgebenden Körper herausgeschoben, nachdem das fließfähige Material im Spalt ausgehärtet ist. Der formgebende Körper gehört zu einem Herstellungswerkzeug und lässt sich dafür verwenden, um nacheinander mehrere erfindungsgemäße Filtereinheiten herzustellen. Nach dem Hinausschieben wird die Abdeckung mit der Ummantelung mechanisch verbunden. Um die Abdeckung mit der Ummantelung zu verbinden, wird das Filterelement bevorzugt dadurch gegriffen und gehalten, dass die Ummantelung von zwei gegenüberliegenden Seiten gegriffen wird.

Möglich ist auch, dass das Werkstück aus dem formgebenden Körper heraus und in ein starres Gehäuse hineingeschoben wird. Die starre Abdeckung wird mit diesem starren Gehäuse verbunden.

Bei dieser Fortbildung steht der formgebende Körper frühzeitig wieder zur Verfügung, um eine weitere erfindungsgemäße Filtereinheit herzustellen oder um den formgebenden Körper zu reinigen. Der formgebende Körper behindert nicht den Vorgang, die starre Abdeckung mit der nachgiebigen Ummantelung oder mit dem starren Gehäuse mechanisch zu verbinden.

In einer Fortbildung der Ausgestaltung wird zunächst die Abdeckung mit der Ummantelung aus dem ausgehärteten oder dem aushärtenden fließfähigen Material verbunden, während sich der Filter im formgebenden Körper befinden. Dadurch wird die Filtereinheit im formgebenden Körper erzeugt. Anschließend wird die Filtereinheit aus dem formgebenden Körper entnommen. Diese Fortbildung ermöglicht es, die Filtereinheit an der Abdeckung, insbesondere an einer Koppeleinheit der Abdeckung, zu greifen und die auf diese Weise gegriffene Filtereinheit aus dem formgebenden Körper zu entnehmen.

In einer Ausgestaltung bildet die äußere Oberfläche der Ummantelung, die durch das Aushärten des fließfähigen Materials entsteht, die äußere Oberfläche der Filtereinheit. Die Abdeckung wird mit der Ummantelung mechanisch verbunden. Der formgebende Körper, in den der Filter und dann das fließfähige Material verbracht werden, gehört zu einem Herstellungswerkzeug. Bevorzugt wird dieses Herstellungsverfahren verwendet, um nacheinander mehrere gleichartige erfindungsgemäße Filtereinheiten herzustellen.

Die starren Filter dieser erfindungsgemäßen Filtereinheiten können sich hinsichtlich einer Abmessung und / oder ihrer Geometrie voneinander unterscheiden, und trotzdem lässt sich dasselbe Herstellungswerkzeug verwenden. Solche Unterschiede zwischen verschiedenen Exemplaren des starren Filters sind insbesondere aufgrund von Fertigungstoleranzen in der Regel nicht vermeidbar. Der formgebende Körper lässt sich relativ leicht an vorgegebene Anforderungen anpassen, insbesondere an eine gewünschte Dicke der Ummantelung.

In einer Fortbildung dieser Ausgestaltung umfasst das Herstellungswerkzeug weiterhin eine Zustandsveränderungseinheit. Diese Zustandsveränderungseinheit verändert von außen den Zustand des fließfähigen Materials im formgebenden Körper. Beispielsweise führt die Zustandsveränderungseinheit dem fließfähigen Material Dampf zu und bewirkt dadurch die Aushärtung des fließfähigen Materials. Bevorzugt übt die Zustandsveränderungseinheit keine relevante mechanische Einwirkung auf den Filter aus.

In einer anderen Ausgestaltung des erfindungsgemäßen Herstellungsverfahrens wird ein starres Gehäuse bereitgestellt. Dieses starre Gehäuse wird als der formgebende Körper verwendet oder bildet einen Teil des formgebenden Körpers. Zwischen der Mantelfläche des Filters und der Innenwand des starren Gehäuses tritt der Spalt auf. **In** diesen Spalt wird das fließfähige Material verbracht und härtet dort wenigstens teilweise aus. Nach dem Aushärten befindet die Ummantelung sich zwischen der Mantelfläche des Filters und der Innenwand des starren Gehäuses. Die Abdeckung wird mechanisch mit dem starren Gehäuse verbunden.

Bevorzugt werden durch das erfindungsgemäße Herstellungsverfahren nacheinander mehrere erfindungsgemäße Filtereinheiten erzeugt. Sowohl die starren Filter als auch die starren Gehäuse können sich hinsichtlich einer Abmessung oder ihrer Geometrie bei verschiedenen Exemplaren voneinander unterscheiden, insbesondere aufgrund von unvermeidlichen Fertigungstoleranzen. Dadurch variiert der Spalt zwischen dem Filter und dem Gehäuse von Filtereinheit zu Filtereinheit. Das fließfähige Material und die daraus erzeugte nachgiebigen Ummantelung passen sich an die jeweilige Geometrie dieses Spalts an.

Weiter oben wurden zwei Ausgestaltungen des formgebenden Körpers beschrieben, nämlich einmal ein formgebender Körper eines Herstellungswerkzeugs und einmal ein starres Gehäuse der Filtereinheit als der formgebende Körper. In beiden Ausgestaltungen ist es möglich, nacheinander mehrere erfindungsgemäße Filtereinheiten herzustellen und hierfür jedes Mal das gleiche fließfähige Material zu verwenden. Möglich ist auch, nacheinander mehrere Filtereinheiten mit unterschiedlichen fließfähigen Materialien herzustellen, um mehrere Filtereinheiten mit unterschiedlichen Ummantelungen herzustellen, welche unterschiedliche Anforderungen erfüllen.

Optional wird auf die Ummantelung oder auf das starre Gehäuse eine Folie aufgebracht, beispielsweise aufgeklebt. Diese Folie umgibt wenigstens die Mantelfläche der Ummantelung bzw. des starren Gehäuses. In einer Ausgestaltung wird die Folie aufgebracht, nachdem das fließfähige Material ausgehärtet ist und die Ummantelung bildet. Besonders bevorzugt wird die Folie außen auf das starre Gehäuse aufgeklebt. Möglich ist auch, eine Farbschicht oder eine Lackschicht auf die Ummantelung bzw. auf das Gehäuse aufzubringen. Möglich ist auch, die Farbschicht oder die Lackschicht außen auf das Gehäuse aufzubringen, bevor der starre Filter und anschließend das fließfähige Material in das Gehäuse verbracht werden.

In einer anderen Ausgestaltung wird die umlaufende Innenwand des formgebenden Körpers mit einer Folie verbunden, der Filter wird in den Hohlraum verbracht, und anschließend wird das fließfähige Material in den Spalt eingefüllt. Bei dieser Ausgestaltung befindet sich der Spalt, in den das fließfähige Material eingebracht wird, zwischen dem Filter und der Folie. In vielen Fällen ermöglicht diese Ausgestaltung es, dass das abhärtende fließfähige Material sich stoffschlüssig sowohl mit der Mantelfläche des Filters als auch mit der Innenseite der Folie verbindet. In vielen Fällen wird dadurch die Notwendigkeit erspart, eine Klebeverbindung zwischen der Folie und der Ummantelung herzustellen.

Das erfindungsgemäße Herstellungsverfahren zeigt einen Weg auf, um eine Filtereinheit mit einem Filter in Form eines starren Körpers herzustellen, wobei - verglichen mit anderen möglichen Herstellungsverfahren - die Gefahr reduziert wird, dass der Filter bei der Herstellung beschädigt wird.

Das Verfahren ermöglicht es, den Filter getrennt von den übrigen Bestandteilen der Filtereinheit herzustellen. Ermöglicht wird, nacheinander eine große Anzahl von Filtereinheiten herzustellen.

Im Folgenden wird die Erfindung anhand von mehreren Ausführungsbeispielen beschrieben. Hierbei zeigt
- Figur 1: schematisch in einer Seitenansicht eine erfindungsgemäße Filtereinheit gemäß dem Granulat-Ausführungsbeispiel;
- Figur 2: schematisch in einer Querschnittsdarstellung in der Ebene A - A von Figur 1 die Filtereinheit gemäß dem Granulat-Ausführungsbeispiel;
- Figur 3: schematisch in einer Seitenansicht, wie eine Filtereinheit gemäß dem Granulat-Ausführungsbeispiel und mit einem starren Gehäuse hergestellt wird;
- Figur 4: schematisch in einer Seitenansicht, wie eine Filtereinheit gemäß dem Granulat-Ausführungsbeispiel und ohne ein starres Gehäuse hergestellt wird: Granulat wird eingefüllt und härtet aus;
- Figur 5: Fortsetzung des Granulat-Ausführungsbeispiels von Figur 4: Die Filtereinheit wird aus dem Topf herausgeschoben;
- Figur 6: schematisch in einer Seitenansicht eine erfindungsgemäße Filtereinheit gemäß dem Schaumstoff-Ausführungsbeispiel;
- Figur 7: schematisch in einer Seitenansicht, wie ein Schlauch aus flüssigem Kunststoff für die Filtereinheit gemäß dem Schaumstoff-Ausführungsbeispiel hergestellt wird;
- Figur 8: schematisch in einer Querschnittsdarstellung in der Ebene B - B von Figur 7 die Matrize für die Herstellung des Schlauchs von Figur 7;
- Figur 9: schematisch in einer Seitenansicht, wie eine Filtereinheit gemäß dem Schaumstoff-Ausführungsbeispiel aus dem Schlauch von Figur 7 hergestellt wird.

In den nachfolgend beschriebenen Ausführungsbeispielen wird die Erfindung für eine Atemschutzmaske verwendet. Mithilfe dieser Atemschutzmaske kann ein Mensch, beispielsweise ein Angehöriger der Feuerwehr oder der Polizei, sich in einem mit Schadstoff belasteten Bereich aufhalten und dennoch schadstofffreie Atemluft einatmen. Dieser Mensch wird im Folgenden als "der Träger" der Atemschutzmaske bezeichnet. Dank der Atemschutzmaske atmet der Träger gefilterte Atemluft ein.

Die Filtereinheit lässt sich auch in einem Atemschutzgerät verwenden. Dieses Atemschutzgerät umfasst eine Gesichtsmaske, mindestens eine erfindungsgemäße Filtereinheit sowie eine Förderereinheit für Gas, beispielsweise eine Pumpe. Diese Förderereinheit saugt Umgebungsluft an, welche durch die oder mindestens eine erfindungsgemäße Filtereinheit fließt. Die oder mindestens eine erfindungsgemäße Filtereinheit filtert die eingesogene Atemluft, und der Träger atmet dann diese von Schadstoffen gereinigte Atemluft ein.

Die Atemschutzmaske umfasst die eigentliche Gesichtsmaske, die am Gesicht anliegt, sowie mindestens eine Filtereinheit, bevorzugt mindestens zwei Filtereinheiten. Die Gesichtsmaske ist aus einem verformbaren Material, um sich an die Form des Kopfes des Trägers anzupassen und fluiddicht am Kopf anzulegen, und umfasst für die oder jede Filtereinheit jeweils eine Gewindefassung, in die sich eine Filtereinheit einschrauben und wieder herausschrauben lässt. Alternativ lässt sich die oder jede Filtereinheit mithilfe jeweils eines Bajonettanschlusses lösbar verbinden. Dank der lösbaren Verbindung kann der Träger eine Filtereinheit austauschen, ohne die Gesichtsmaske absetzen zu müssen.

Im Folgenden werden zwei Ausführungsbeispiele einer erfindungsgemäßen Filtereinheit 100 beschrieben, welche als "Granulat-Ausführungsbeispiel" und "Schaumstoff-Ausführungsbeispiel" bezeichnet werden.

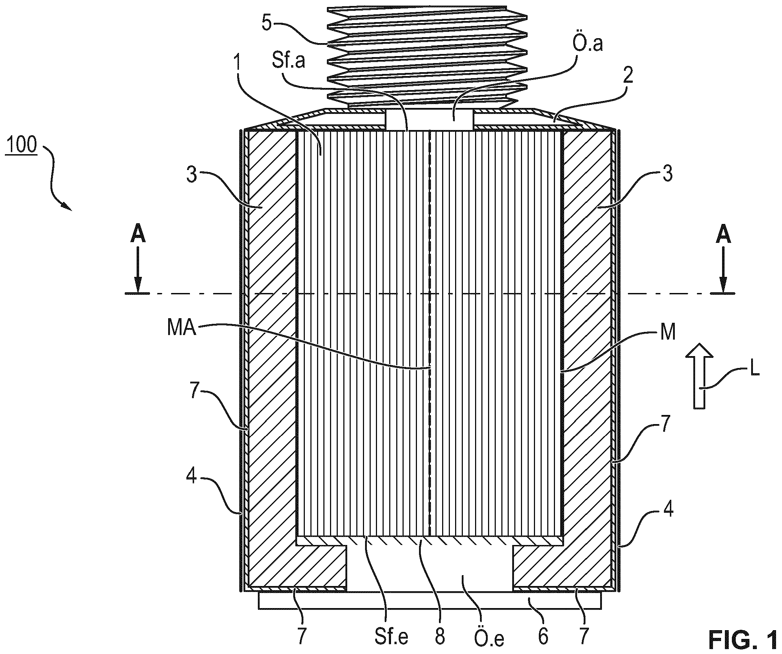

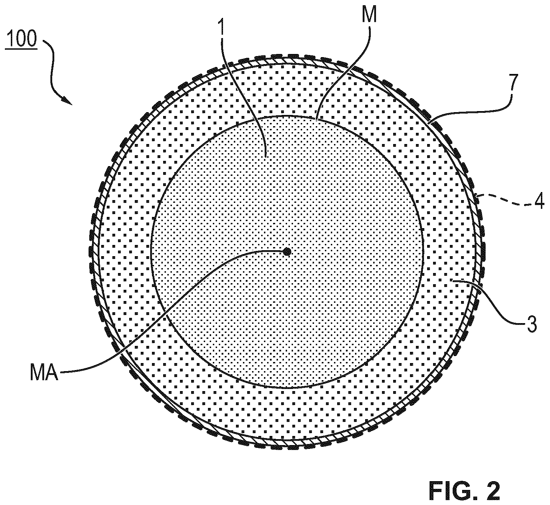

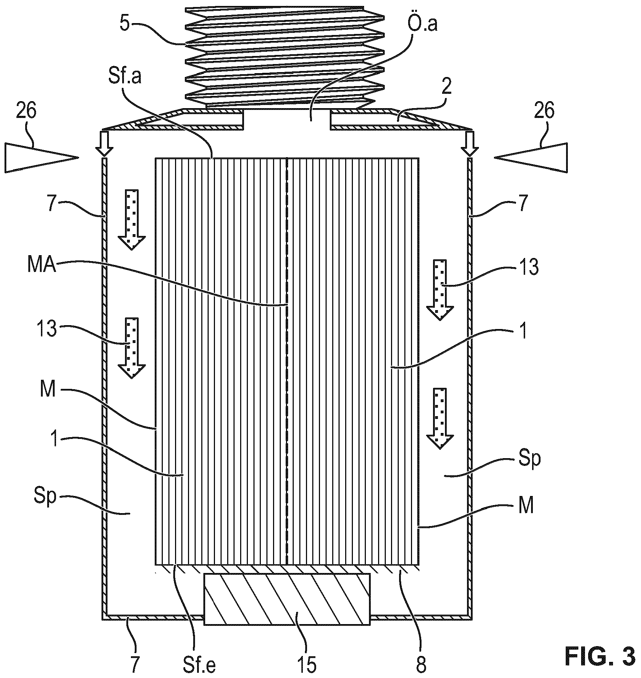

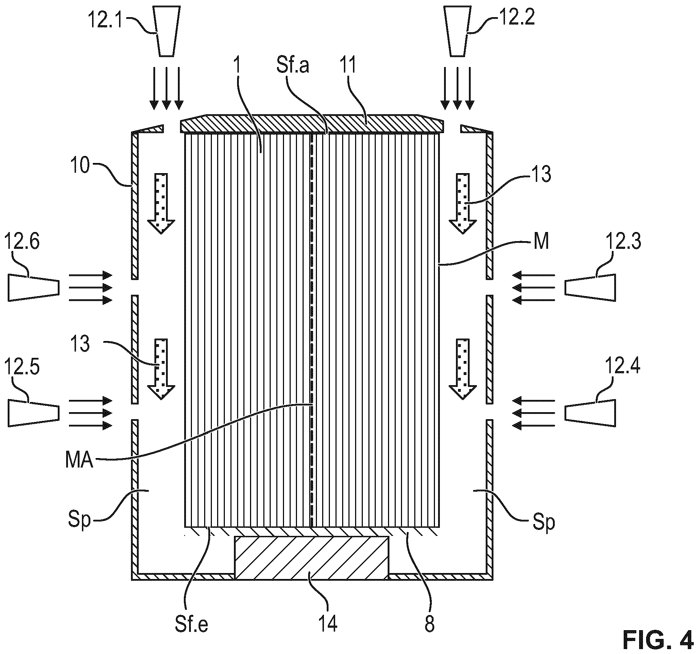

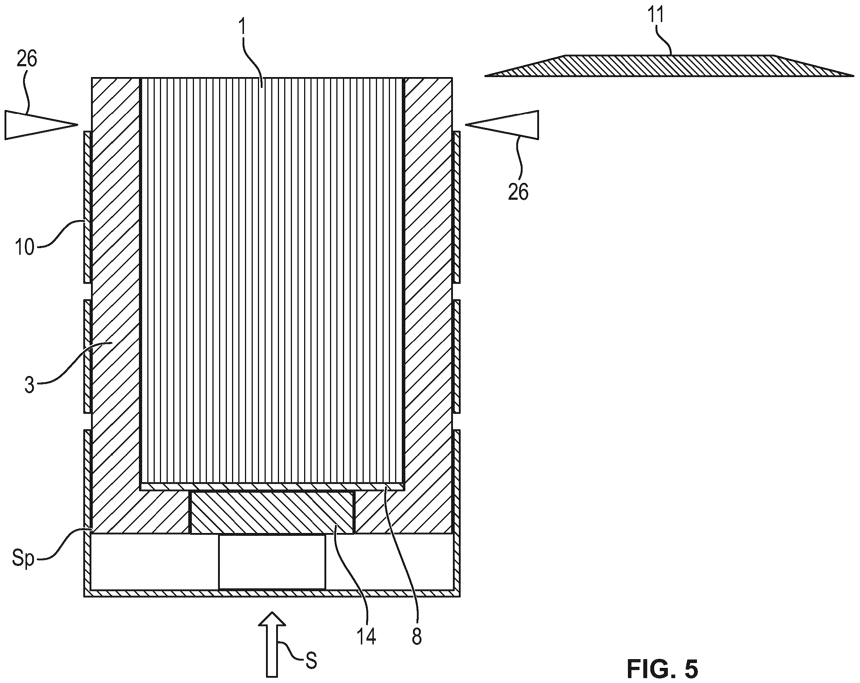

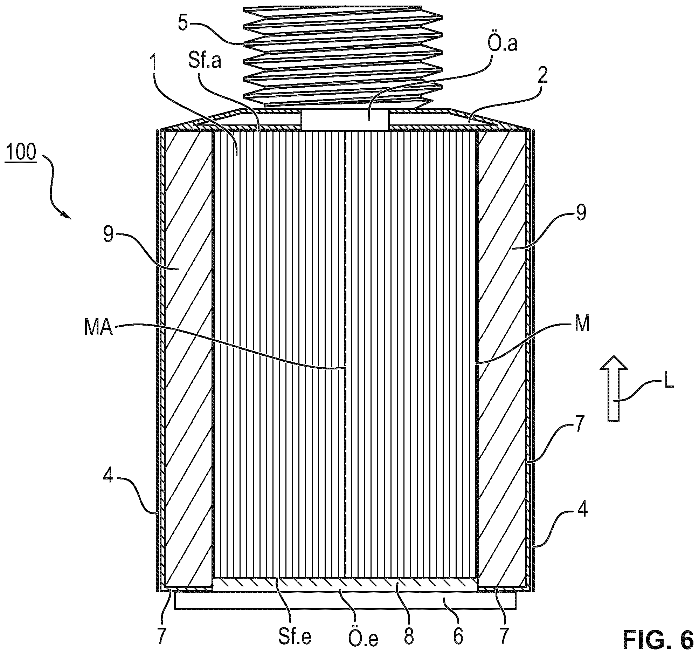

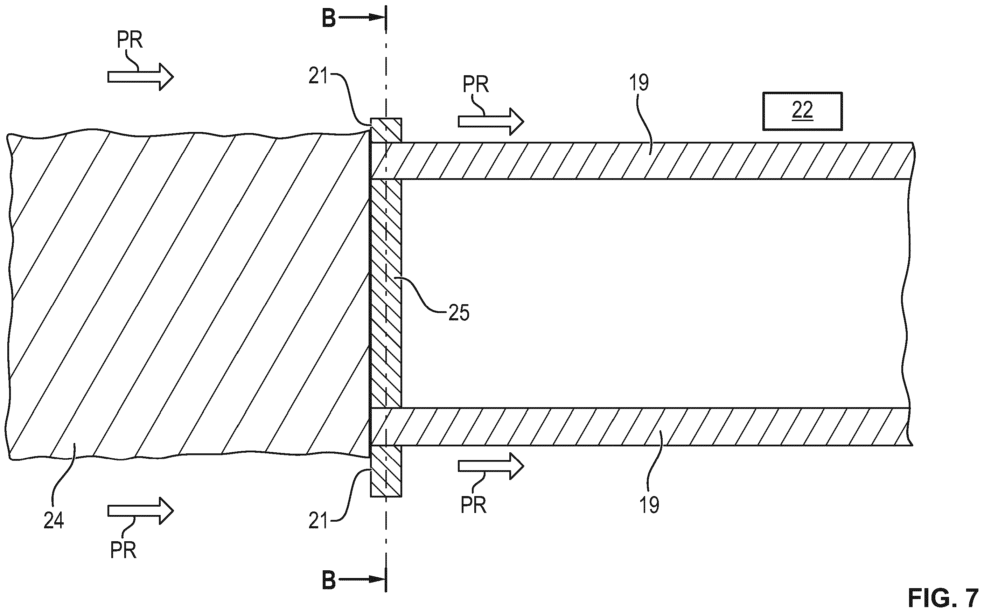

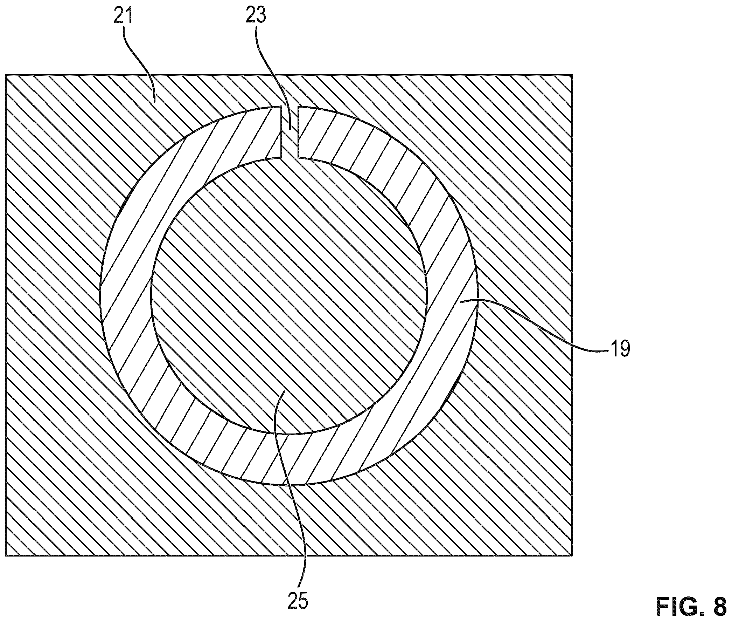

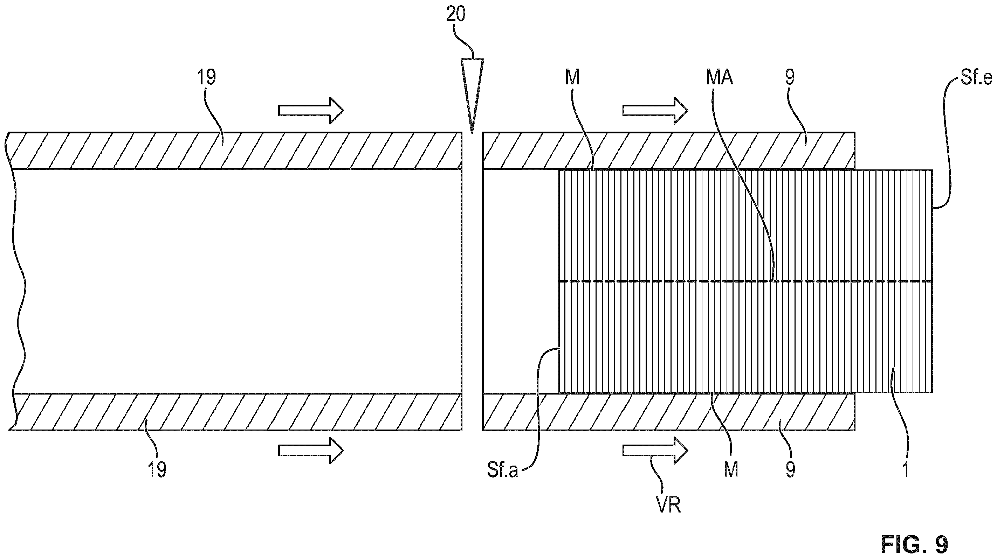

Figur 1 zeigt schematisch in einer Seitenansicht eine Filtereinheit 100 gemäß dem Granulat-Ausführungsbeispiel, Figur 2 schematisch eine Querschnittsdarstellung in der Ebene A - A von Figur 1. Figur 3 veranschaulicht schematisch in einer Seitenansicht, wie eine Filtereinheit 100 gemäß dem Granulat-Ausführungsbeispiel mit einem starren Gehäuse hergestellt wird. Figur 4 und Figur 5 veranschaulichen schematisch in einer Seitenansicht die Herstellung einer Filtereinheit 100 gemäß dem Granulat-Ausführungsbeispiel ohne ein starres Gehäuse. Figur 6 zeigt schematisch in einer Seitenansicht eine Filtereinheit 100 gemäß dem Schaumstoff-Ausführungsbeispiel. Figur 7 veranschaulicht schematisch in einer Seitenansicht, wie ein Schlauch aus Schaumstoff hergestellt wird, der anschließend für die Herstellung einer Filtereinheit 100 gemäß dem Schaumstoff-Ausführungsbeispiel verwendet wird. Figur 8 zeigt schematisch in einer Querschnittsdarstellung in der Ebene B - B von Figur 7 die zum Herstellen der Filtereinheit 100 gemäß Figur 7 verwendete Matrize. Figur 9 zeigt schematisch in einer Seitenansicht, wie aus einem Schlauch aus Schaumstoff eine Filtereinheit 100 gemäß dem Schaumstoff-Ausführungsbeispiel hergestellt wird. Die Figuren sind nicht notwendigerweise maßstabgetreue Darstellungen.

Eine Filtereinheit 100 hat gemäß beiden Ausführungsbeispielen die Form eines Zylinders mit einem am Zylinder angefügten Kegelstumpf, der ein Gewinde 5 trägt. Die Filtereinheit 100 umfasst eine Einströmseite, die in Figur 1, und Figur 3 bis Figur 6 unten dargestellt ist und durch welche die eingeatmete oder eingesogene Atemluft in die Filtereinheit 100 fließt, und eine Ausströmseite, durch welche die Atemluft wieder aus der Filtereinheit 100 fließt und welche oben dargestellt ist. Das Gewinde 5 ist auf der Ausströmseite angeordnet. In Figur 1 und Figur 6 ist die Richtung, in welche Luft durch die Filtereinheit 100 durchströmt, durch einen von unten nach oben zeigenden Pfeil L dargestellt.

Die eingeatmete oder eingesogene Luft fließt durch eine einströmseitige Öffnung Ö.e auf der Einströmseite in die Filtereinheit 100, fließt durch den eigentlichen Filter 1 und tritt an der Ausströmseite durch eine ausströmseitige Öffnung Ö.a hindurch wieder aus der Filtereinheit 100 aus. Der Filter 1 filtert mindestens ein Gas aus der Atemluft heraus, während diese Atemluft den Filter 1 durchströmt. Der Filter 1 des Ausführungsbeispiels vermag keine Partikel aus der Atemluft herauszufiltern.

In beiden Ausführungsbeispielen umfasst die Filtereinheit 100 jeweils einen Filter 1, der unter Verwendung von gepresster Aktivkohle hergestellt ist und sich als ein Aktivkohle-Waben-Monolith bezeichnen lässt. Der Filter 1 kann z.B. auch aus Ca(OH)₂ hergestellt sein. Bevorzugt ist der Filter 1 mit einem geeigneten Mittel imprägniert. Der Filter 1 ist von einer Vielzahl von parallelen Kanälen durchgezogen, die sich parallel zur Richtung L erstrecken und bevorzugt nicht untereinander verbunden sind. Dieser Filter 1 kann so wie in DE 10 2015 012 410 A1 beschrieben aufgebaut sein und insbesondere eine der dort beschriebenen Material-Zusammensetzungen aufweisen. Die Filtereinheit 100 ist so aufgebaut, dass die Atemluft, die durch die Filtereinheit 100 fließt, auch durch den Filter 1 fließt und nicht den Filter 1 umgeht.

In einer Ausgestaltung, die in den Figuren gezeigt wird, ist der Filter 1 ein einziger starrer Körper in Form eines Zylinders. Möglich ist auch, dass der Filter 1 aus mehreren Scheiben besteht, die hintereinander in einer Abfolge angeordnet sind. Diese Ausgestaltung erleichtert es, den Filter 1 aus unterschiedlichen Materialien herzustellen, sodass der Filter 1 unterschiedliche Gase herauszufiltern vermag.

Ein monolithischer Filter 1 aus Aktivkohle in Form eines starren Körpers oder einer Abfolge von starren Körpern übt einen deutlich geringeren Fließwiderstand und damit Atemwiderstand aus als ein anderer Filter mit ähnlicher Filterleistung. Daher strengt die Benutzung eines solchen monolithischen Filters 1 den Träger weniger an als ein anderer Filter. In manchen Fällen ist ein solcher Filter leichter (geringeres Gewicht) als ein anderer Filter mit ähnlicher Filterleistung. In manchen Fällen nimmt ein monolithischer Filter weniger Platz ein als ein anderer Filter mit ähnlicher Filterleistung.

Im Ausführungsbeispiel hat der starre Filter 1 die Form eines Zylinders, der sich entlang einer Mittelachse MA erstreckt und eine Mantelfläche M, eine kreisrunde einströmseitige Stirnfläche Sf.e und eine kreisrunde ausströmseitige Stirnfläche Sf.a aufweist. Die Mittelachse MA und die Mantelfläche M stehen senkrecht auf der Zeichenebene von Figur 2. Die Einströmseite bildet die einströmseitige Stirnfläche Sf.e des Zylinders und die Ausströmseite die ausströmseitige Stirnfläche Sf.a. Die Mantelfläche M erstreckt sich zwischen diesen beiden Stirnflächen Sf.e, Sf.e. Der starre Filter 1 kann auch die Form eines Kegelstumpfs haben, wobei der Durchmesser sich von der einströmseitigen Stirnfläche Sf.e zu der ausströmseitigen Stirnfläche Sf.a vergrößert.

Ein Nachteil eines Filters, der als ein starrer Körper aus Aktivkohle ausgestaltet ist, ist der folgende: Bei einem Stoß kann ein Teil vom Filter 1 abbrechen oder der Filter 1 sogar zerbrechen. Ein solcher Stoß tritt beispielsweise dann auf, wenn die Filtereinheit 100 auf einen Boden fällt oder beim Einsatz gegen einen harten Gegenstand stößt, beispielsweise wenn der Träger den Kopf dreht.

In beiden Ausführungsbeispielen umfasst die Filtereinheit 100 mehrere Bestandteile, welche das Risiko verringern, dass der Filter 1 bei einem Stoß beschädigt wird, dieses Risiko aber nicht vollständig ausschließen können. Diese Bestandteile werden nachfolgend beschrieben.

Die Filtereinheit 100 gemäß dem Granulat-Ausführungsbeispiel umfasst - zusätzlich zu dem Filter 1 - folgende Bestandteile:
- das Gewinde 5 an der Ausströmseite, wobei das Gewinde 5 aus einem starren Material hergestellt ist, bevorzugt aus einem Metall oder einem starren Kunststoff,
- einen Deckel 2 aus einem starren Material, bevorzugt aus einem Metall oder starren Kunststoff, wobei der Deckel 2 die Form eines Kegelstumpfs hat,
- ein Gehäuse 7 aus einem starren Material, wobei das Gehäuse 7 ein Rohr umfasst,
- eine Ummantelung 3 aus einem elastisch verformbaren Material in Form von ausgehärtetem Granulat,
- einen Partikelfilter 8 vor der einströmseitigen Stirnfläche Sf.e des Filters 1,
- optional einen Flammschutz 4 in Form einer Folie oder einer Farbschicht oder Lackschicht um das Gehäuse 7 herum und
- einen Griffschutz 6 vor der einströmseitigen Öffnung Ö.e.

Bei dem gezeigten Granulat-Ausführungsbeispiel besteht die Ummantelung 3 aus einem ausgehärtete Granulat. Möglich sind auch andere elastische Materialien, beispielsweise ein thermoplastisches Elastomer, ein Epoxidharz oder sonstiges künstliches oder natürliches Harz, ein Polyurethan, eine Butylmasse, ein Silikon oder auch ein elastischer Heißkleber. Die Ummantelung 3 kann vollständig ausgehärtet sein. Falls die Ummantelung 3 von einem starren Gehäuse 7 umgeben ist, ist es auch möglich, dass die Ummantelung 3 nicht vollständig ausgehärtet ist.

Die Ummantelung 3 befindet sich zwischen der Mantelfläche M des starren Filters 1 und dem Rohr des starren Gehäuses 7. Bevorzugt füllt die Ummantelung 3 den Raum zwischen der Mantelfläche M des Filters 1 und dem starren Gehäuse 7 vollständig aus.

Bevorzugt verbindet sich die Ummantelung 3 bei der Herstellung der Filtereinheit 100 stoffschlüssig mit der Mantelfläche M des zylinderförmigen Filters 1. Ein Herstellungsverfahren wird weiter unten beschrieben. Bevorzugt ist kein separater Schritt erforderlich, um die Ummantelung 3 mit dem Filter 1 zu verbinden. Insbesondere ist keine Klebeverbindung oder Rastverbindung erforderlich. Außerdem befindet sich nicht notwendigerweise zwischen der Mantelfläche M des Filters 1 und der Ummantelung 3 eine weitere Schicht, beispielsweise eine Schicht aus einem Vliesstoff.

Erfindungsgemäß ist die Ummantelung 3 elastisch. Dadurch stellt die Ummantelung 3 eine federnde Wirkung bereit, was die Gefahr weiter reduziert, dass der Filter 1 beschädigt wird. In Figur 1, Figur 5 und Figur 6 ist die Dicke der Ummantelung 3 übertrieben dargestellt.

Die Ummantelung 3 nimmt kinetische Energie auf, die von außen auf die Filtereinheit 100 einwirkt, und schützt dadurch bis zu einem gewissen Grad den Filter 1 und insbesondere dessen Mantelfläche M und die beiden Übergänge zwischen der Mantelfläche M und den beiden Stirnflächen Sf.e, Sf.a vor mechanischen Beschädigungen. In einer Ausgestaltung stellt die Ummantelung 3 eine Integralwandung bereit, d.h. die Härte der Ummantelung 3 nimmt von außen nach innen ab. Dadurch vermag die Ummantelung 3 noch besser kinetische Energie zu absorbieren. Die Elastizität der Ummantelung 3 ist bevorzugt innen, also in einem an den Filter 1 anliegenden Bereich, größer als außen.

Im Ausführungsbeispiel liegt die Dicke der Ummantelung 3, also die minimale Abmessung senkrecht zur Mittelachse MA, zwischen 0,5 mm und 1,5 mm.

Das Gehäuse 7 hat die Form eines Zylinders, der an der ausströmseitigen Stirnfläche vollständig geöffnet ist und an der einströmseitigen Stirnfläche die kreisförmige Öffnung Ö.3 freigibt, ist aus einem Metall oder einem starren Kunststoff hergestellt und umgibt die Ummantelung 3. Der Deckel 2 ist stoffschlüssig oder durch eine Schnappverbindung mit dem Gehäuse 7 verbunden. In einer Ausgestaltung ist der Deckel 2 zusätzlich mit der zur Ausströmseite zeigenden Stirnfläche der Ummantelung 3 verbunden, bevorzugt durch eine Klebeverbindung und optional zusätzlich oder stattdessen durch eine Schnappverbindung. Das Gewinde 5 ist fest mit dem Deckel 2 verbunden. Möglich ist, dass auf die Filtereinheit 100 ein Kraftstoß parallel oder schräg zur Mittelachse MA auf den Deckel 2 einwirkt, und zwar von der einströmseitigen Öffnung Ö.e her. Dieser Kraftstoß wird in das starre Gehäuse 7 eingeleitet.

Die Flammschutzfolie 4 ist um die nach außen zeigenden Oberfläche des Gehäuses 7 herum geführt und mit dieser Oberfläche stoffschlüssig verbunden, bevorzugt durch eine Klebeverbindung. Die Flammschutzfolie 4 ermöglicht in manchen Anwendungen, dass die Filtereinheit 100 einer höheren Temperatur standhalten kann - verglichen mit einer Ausgestaltung ohne eine Flammschutzfolie 4. In anderen Anwendungen reicht die Hitzebeständigkeit der des Gehäuses 7 und der Ummantelung 3 aus, sodass eine Flammschutzfolie 4 nicht erforderlich ist. In manchen Anwendungen kann die Flammschutzfolie 4 auch erforderlich sein, damit die Filtereinheit 100 in einer Umgebung mit einer hohen Luftfeuchtigkeit oder bei starkem Regen eingesetzt werden kann, optional in Verbindung mit einer hohen Temperatur. Auf die Flammschutzfolie 4 kann eine Kennzeichnung der Filtereinheit 100 aufgebracht sein. Beispielsweise unterscheidet diese Kennzeichnung die Filtereinheit 100 von allen anderen Filtereinheiten, die in einem bestimmten Bereich verwendet werden. Diese Kennzeichnung kann mit Informationen über die Filtereinheit 100 verbunden sein, wobei diese Informationen optional in einer Datenbank abgelegt sind, z.B. eine maximale Verwendungsdauer. Die Flammschutzfolie 4 kann Licht und sonstige elektromagnetische Wellen reflektieren oder fluoreszieren oder auch absorbieren.

In einer alternativen Ausgestaltung (nicht gezeigt) ist das starre Gehäuse 7 fortgelassen. Der Deckel 2 ist dann stoffschlüssig mit der Ummantelung 3 verbunden. Die Flammschutzfolie 4 ist auf die nach außen zeigende Oberfläche der Mantelfläche der Ummantelung 3 aufgebracht.

Der Griffschutz 6 verhindert, dass ein Finger des Trägers oder ein größerer Gegenstand von außen durch die einströmseitige Öffnung Ö.e hindurch die einströmseitige Stirnfläche Sf.e des Filters 1 berührt, was zu einer Beschädigung oder Verschmutzung des Filters 1 führen könnte. Der Griffschutz 6 hat bevorzugt die Form eines Gitters und ist aus Kunststoff oder Metall hergestellt, beispielsweise durch Gießen oder durch Spritzgießen. Das zu filternde Gasgemisch kann durch den Griffschutz 6 hindurchfließen. Im Ausführungsbeispiel ist der Griffschutz 6 an die einströmseitige Stirnfläche des starren Gehäuses 7 befestigt.

Im Ausführungsbeispiel befindet sich - gesehen in die Durchströmrichtung L - vor der einströmseitigen Stirnfläche Sf.e des Filters 1 ein Partikelfilter 8, der Partikel aus der durchströmende Luft herausfiltert. Dieser Partikelfilter 8 wird sich zwischen dem Griffschutz 6 und dem Filter 1, ist bevorzugt aus Papier und hat bevorzugt die Form eines Faltenfilters oder auch die Form eines Ringfilters. Optional sind dem Papier des Partikelfilters 8 Mikroglasfaser und / oder Polymerfasern zugesetzt, optional zusätzlich Cellulose in geringen Mengen.

Im Granulat-Ausführungsbeispiel steht die Ummantelung 3 über die einströmseitige Stirnfläche Sf.e des Filters 1 über. Der Griffschutz 6 ist stoffschlüssig mit der zur Einströmseite hin zeigenden Umrandung des starren Gehäuses 7 und zusätzlich mit der einströmseitigen Stirnfläche der Ummantelung 3 verbunden. Zwischen der einströmseitigen Stirnfläche Sf.e des Filters 1 und dem Griffschutz 6 tritt daher ein Abstand auf. Dieser Abstand reduziert weiter die Gefahr einer Beschädigung.

Die Ummantelung 3 kann auch dann über die einströmseitige Stirnfläche Sf.e überstehen, wenn kein Griffschutz vorhanden ist. In den Figuren ist die Strecke, über welche die Ummantelung 3 übersteht, übertrieben dargestellt. Bevorzugt steht die Ummantelung 3 um wenige Millimeter, besonders bevorzugt um weniger als 1 mm, über.

In einer Ausgestaltung nimmt die einströmseitige Öffnung Ö.e die gesamte einströmseitige Stirnfläche Sf.e auf der Einströmseite der Filtereinheit 100 ein. In einer anderen Ausgestaltung, die in Figur 1 gezeigt wird, umschließt die Ummantelung 3 nicht nur vollständig die Mantelfläche M des Filters 1, sondern zusätzlich auch die einströmseitige Öffnung Ö.e und liegt ringförmig an der zur einströmseitigen Öffnung Ö.e hin zeigenden Stirnfläche Sf.e des Filters 1 an. Dadurch schützt die Ummantelung 3 den Filter 1 auch dann bis zu einem gewissen Grade vor einer mechanischen Beschädigung, wenn ein von der Einströmseite her einwirkender mechanischer Impuls auf die Filtereinheit 100 einwirkt, insbesondere wenn die Filtereinheit 100 mit dem Griffschutz 6 voraus auf den Boden fällt. Der Griffschutz 6 ist mit der Ummantelung 3 verbunden und hat einen Abstand zur einströmseitigen Stirnfläche Sf.e.

Figur 3 bis Figur 5 veranschaulichen schematisch zwei bevorzugte Ausgestaltungen eines Verfahren, um eine Filtereinheit 100 gemäß dem Granulat-Ausführungsbeispiel herzustellen. Verwendet wird in beiden Ausgestaltungen ein Granulat 13, welches bei Zimmertemperatur und ausreichend geringer Luftfeuchtigkeit die Form eines Schüttguts hat. Dieses Granulat 13 wird dann, wenn das Granulat 13 erwärmt und optional zusätzlich die Luftfeuchtigkeit erhöht wird, flüssig oder zähflüssig und dehnt sich aus. Beim nachfolgenden Abkühlen erstarrt das Granulat 13 und zieht sich dabei bevorzugt überhaupt nicht oder wenigstens nicht wieder auf die Ausdehnung vor dem Erwärmen zusammen. Dieses Granulat 13 lässt sich auch als ein aushärtender Partikelschaum bezeichnen. Beispiele für Materialien, aus denen ein solches Granulat 13 hergestellt sein kann, sind:
- expandierbares Polypropylen (EPP),
- expandierbares Polystyrol (Styropor, EPS),
- ein sonstiger teilkristalliner Thermoplast.

Anstelle eines Granulat 13 lässt sich auch ein alternativer Werkstoff herstellen, der fließfähig ist und wenigstens bis zu einem gewissen Grade aushärtet, beispielsweise durch Abkühlen oder indem dem Werkstoff vor der Verwendung ein Härter zugesetzt wird. Der alternative Werkstoff ist beispielsweise ein Schaum oder ein sonstiger oben erwähnter Werkstoff.

Im Beispiel von Figur 3 wird eine Filtereinheit 100 mit einem starren Gehäuse 7 aus Metall oder einem harten Kunststoff hergestellt. Das Gehäuse 7 hat die Form eines Zylinders mit einer vollständig geöffneten ersten Stirnfläche und einer zweiten Stirnfläche, in die eine kreisförmige Öffnung eingelassen ist, die von einem Kreisring des Gehäuses 7 umgeben ist.

Der starre Filter 1, das starre Gehäuse 7 sowie der Deckel 2 mit dem Gewinde 5 werden bereitgestellt. Das Gehäuse 7 wird so auf eine Unterlage gestellt, dass die zweite Stirnfläche nach unten zeigt. In die kreisförmige Öffnung wird ein scheibenförmiger Platzhalter 15 eingesetzt. Der Platzhalter 15 füllt die Öffnung in der zweiten Stirnseite vollständig aus. Der Partikelfilter 8 wird auf den Platzhalter 15 aufgelegt. Der starre Filter 1 wird so auf den Partikelfilter 8 gestellt, dass die einströmseitige Stirnfläche Sf.e zum Partikelfilter 8 und damit zum Platzhalter 15 zeigt. Zwischen der Mantelfläche des Gehäuses 7 und der Mantelfläche M des Filters 1 tritt ein umlaufender Spalt Sp auf.

In diesen Spalt Sp hinein wird von oben das fließfähige Granulat 13 geschüttet oder auf andere Weise eingefüllt, beispielsweise nachdem es erhitzt worden ist. Das Granulat 13 fließt nach unten und füllt den Spalt Sp aus und umgibt den Platzhalter 15. der Spalt ist bevorzugt so ausgestaltet, dass keine oder nur eine geringe Menge von fließfähige Granulat 13 in Kanäle des Filters 1 gelangt und diese zusetzt. In manchen Fällen kann es sinnvoll sein, das Granulat 13 in geringem Umfang in Kanäle eindringt, um den Filter 1 besser mit dem Granulat 13 zu verbinden. In vielen Fällen verbindet das Granulat 13 sich bis zu einem gewissen Grad mit dem starren Filter 1.

Das Granulat 13 härtet aus, beispielsweise indem es abgekühlt wird oder indem ein Härter im Granulat 13 sich chemisch verändert. Das ausgehärtete Granulat 13 bildet die Ummantelung 3. Sobald das Granulat 13 ausreichend weit ausgehärtet ist, wird der Platzhalter 15 entfernt, sodass die einströmseitige Öffnung Ö.e gebildet wird. Ein schematisch gezeigtes Schneidwerkzeug 26 schneidet Granulat 13 ab, welches nach oben über das Gehäuse 7 übersteht.

Der Deckel 2 mit dem Gewinde 5 wird von oben auf das Gehäuse 7 aufgesetzt und mechanisch mit dem Gehäuse 7 verbunden. Optional wird die Flammschutzfolie 4 auf die Mantelfläche des Gehäuses 7 aufgeklebt. Nunmehr ist eine Filtereinheit 100 gemäß Figur 1 und Figur 2 hergestellt.

Figur 4 und Figur 5 veranschaulichen schematisch die Herstellung einer Filtereinheit 100 ohne ein starres Gehäuse 7. Figur 4 zeigt folgende Bestandteile eines Werkzeugs, welches zur Herstellung einer solchen Filtereinheit 100 verwendet wird, bevorzugt dafür verwendet wird, um nacheinander mehrere gleichartige erfindungsgemäße Filtereinheiten 100 herzustellen:
- einen formgebenden Körper (wiederverwendbare Urform) 10 in Form eines zylinderförmigen Topfs, in dessen Mantelfläche mehrere Öffnungen eingelassen sind,
- einen Deckel 11 für den formgebenden Körper 10, in den bevorzugt ebenfalls mehrere Öffnungen eingelassen sind,
- ein scheibenförmiger Vorsprung 14 am Boden des topfförmigen Körpers 10 und
- mehrere Düsen 12.1, ..., 12.6 auf Höhe der Öffnungen in der Mantelfläche des Körpers 10.

Die Innenwand des topfförmigen Körpers 10 definiert und umgibt einen zylinderförmigen Hohlraum. Der Durchmesser dieses Hohlraums ist größer als der Durchmesser des zylinderförmigen Filters 1. Daher tritt zwischen der Mantelfläche M des Filters 1 im Körper 10 und der Innenwand der Mantelfläche des Körpers 10 ein umlaufender Spalt Sp auf.

Das Herstellungsverfahren gemäß Figur 4 und Figur 5 umfasst die folgenden Schritte:
- Der topfförmige Körper 10 ist oder wird so positioniert, dass er nach oben offen ist.
- Optional wird ein Partikelfilter 8 auf den Boden des topfförmigen Körpers 10 oder auf den Vorsprung 14 gelegt.
- Der Filter 1 wird hergestellt oder bereitgestellt und dergestalt in den topfförmigen Körper 10 eingestellt, dass die Mittelachse MA des Filters 1 mit der Mittelachse des Topfs 10 übereinstimmt und eine Stirnfläche des zylinderförmigen Filters 1 auf dem Vorsprung 14 steht und die andere Stirnfläche nach oben zeigt. Der Vorsprung 14 ist kleiner als die Stirnfläche, sodass die Stirnfläche nach allen Seiten über den Vorsprung 14 übersteht. Diejenige Stirnfläche, die auf dem Vorsprung 14 steht, wird die einströmseitige Stirnfläche Sf.e, die andere Stirnfläche die ausströmseitige Stirnfläche Sf.a. Optional wird der Filter 1 so auf den Partikelfilter 8 gestellt, dass die einströmseitige Stirnfläche Sf.e den Partikelfilter 8 berührt.
- In den Spalt Sp hinein wird von oben Granulat 13, welches so wie oben beschrieben bei Zimmertemperatur die Form eines Schüttguts hat, eingebracht. Bevorzugt wird so viel Granulat 13 eingebracht, dass der gesamte Spalt Sp bis zum oberen Rand des Körpers 10 mit Granulat 13 ausgefüllt ist. Möglich ist auch, dass ein oberer Bereich des Spalts Sp frei von Granulat 13 bleibt.
- Der Deckel 11 wird auf den formgebenden Körper 10 aufgesetzt und bevorzugt lösbar mit dem Körper 10 verbunden.
- Die Düsen 12.1, ..., 12.6 stoßen heißen Wasserdampf oder einen sonstigen heißen Dampf aus, vgl. Figur 4.
- Dieser heiße Dampf durchdringt Öffnungen in der Mantelfläche des Körpers 10 sowie in dem Deckel 11 und erreicht das Granulat 13 im Spalt Sp.
- Das Granulat 13 wird aufgrund des Dampfs und der Erhitzung flüssig oder zähflüssig. Optional dehnt sich das Granulat 13 hierbei aus.
- Die Zufuhr von erhitztem Dampf wird beendet. Das Granulat 13 im Spalt Sp härtet aus. Das Aushärten des Granulats 13 im Spalt Sp wird auf der einen Seite von dem formgebenden Körper 10 und dem Deckel 11 und auf der anderen Seite von dem Filter 1 begrenzt. Daher härtet das Granulat 13 unter Druck aus. Optional zieht das Granulat 13 sich beim Aushärten zusammen.
- In einer Ausgestaltung verbindet sich das Granulat 13 beim Aushärten bis zu einem gewissen Grad stoffschlüssig mit dem Filter 1.
- Nach dem Aushärten bildet das ausgehärtete und erstarrte Granulat 13 die Ummantelung 3 um die Mantelfläche M und um einen Teil der einströmseitigen Stirnfläche Sf.e des Filters 1. Der scheibenförmige Vorsprung 14 bewirkt, dass die einströmseitige Öffnung Ö.e gebildet wird. Flüssiges Granulat 13 kann von unten in die Kanäle im Filter 1 eindringen, aber nicht von der Seite. Die einströmseitige Öffnung Ö.e bleibt dank des Vorsprungs 14 frei von Granulat.
- Nachdem das Granulat 13 vollständig ausgehärtet ist, ist eine verformbare Ummantelung 3 um den Filter 1 gebildet. In einer Ausgestaltung ist diese Ummantelung 3 stoffschlüssig mit der Mantelfläche M des Filters 1 verbunden.
- Der Deckel 11 wird wieder entfernt, und der ummantelte Filter 1 wird in die Richtung S aus dem Körper 10 herausgeschoben, vgl. Figur 5.
- In einer Ausgestaltung gehört der Vorsprung 14 zu einem Stempel, welcher ausgefahren wird und den ummantelten Filter 1 in die Richtung S aus dem Körper 10 hinausschiebt.
- Während der Filter 1 aus dem Topf 10 herausgeschoben wird, wird Granulat 13, welches durch die Öffnungen in der Mantelfläche des Körpers 10 hinausgequollen ist, mittels eines Schneidwerkzeugs 26 abgeschnitten und dadurch von der Ummantelung 3 getrennt. Optional wird der Deckel 11 dergestalt in eine Richtung, die senkrecht auf der Richtung S steht, verschoben oder verschwenkt, dass auch Granulat 13, welches durch Öffnungen im Deckel 11 ausgetreten ist, abgeschnitten wird.
- Nunmehr ist ein zylinderförmiger ummantelter Filter 1 hergestellt. Optional wird die Flammschutzfolie 4 stoffschlüssig mit der Mantelfläche M des ummantelten Filters 1 verbunden, bevorzugt durch Kleben.
- Der Deckel 2 und das Gewinde 5 werden hergestellt und miteinander verbunden, was bevorzugt getrennt von dem Herstellen und Ummanteln des Filters 1 durchgeführt wird.
- Der Deckel 2 wird mit der zur Ausatemseite hin zeigenden Stirnfläche Sf.a der Ummantelung 3 verbunden, bevorzugt durch eine stoffschlüssige Verbindung, besonders bevorzugt durch Kleben.

Nunmehr ist eine zur Verwendung geeignete Filtereinheit 100 hergestellt.

In einer nicht gezeigten Abwandlung dieses Verfahrens werden der Deckel 2 umfassend das Gewinde 5 mit der nach oben zeigende Stirnfläche der Ummantelung 3 verbunden, während der ummantelte Filter 1 sich noch in dem formgebenden Körper 10 befindet.

In einer weiteren Abwandlung des Verfahrens werden vor dem Einfüllen des Granulats 13 nicht nur der Filter 1, sondern zusätzlich die Folie 4 in den Topf 10 verbracht. Die Folie 4 wird von innen gegen die umlaufende Innenwand des Topfs 10 verbracht, sodass idealerweise kein Abstand zwischen der Folie 4 und der Innenwand auftritt. Anschließend wird das Granulat 13 in den Spalt Sp zwischen der Folie 4 und dem Filter 1 verbracht. Nachdem heißer Dampf zugeführt wird, verbindet sich das Granulat 13 stoffschlüssig sowohl mit dem Filter 1 als auch mit der Folie 4. In einer Ausgestaltung wird der heiße Dampf von oben durch den Deckel 11 und von unten durch Öffnungen im Boden des Topfs 10 verbracht, während die Mantelfläche des Topfs 10 keine Öffnungen aufweist.

Figur 6 zeigt eine Filtereinheit 100 gemäß dem Schaumstoff-Ausführungsbeispiel. Gleiche Bestandteile haben die gleichen Bezugszeichen wie bei der Filtereinheit 100 gemäß dem Granulat-Ausführungsbeispiel (Figur 1 und Figur 2).

Die Filtereinheit 100 gemäß dem Schaumstoff-Ausführungsbeispiel besitzt anstelle einer Ummantelung 3 aus einem ausgehärteten Granulat 13 eine Ummantelung 9 in der Gestalt eines Formteils aus einem verformbaren Material, insbesondere aus mindestens einem der folgenden Materialien, optional aus einer Mischung von mehreren der folgenden Materialien:
- expandierter Thermoplast-Schaumstoff,
- Elastomer aus Silikon,
- Elastomer aus Naturkautschuk (umgangssprachlich "Gummi" genannt).

Diese Ummantelung 9 nimmt genau wie die Ummantelung 3 kinetische Energie auf und umgibt die gesamte Mantelfläche M des Filters 1, überdeckt aber in diesem Ausführungsbeispiel nicht eine Stirnfläche Sf.e, Sf.a des Filters 1 und steht auch nicht über die einströmseitige Stirnfläche Sf.e des Filters 1 über. Daher nimmt die einströmseitige Öffnung Ö.e die gesamte zur Einströmseite hin zeigende Stirnfläche Sf.e des Filters 1 ein. Ein starres Gehäuse 7 umgibt die Mantelfläche der Ummantelung 9 und die einströmseitige Öffnung Ö.e. Der Griffschutz 6 ist stoffschlüssig mit dem Gehäuse 7 verbunden und überdeckt die einströmseitige Öffnung Ö.e und daher die gesamte zur Einströmseite hin zeigende Stirnfläche Sf.e. Zwischen dem Griffschutz 6 und der einströmseitigen Stirnfläche Sf.e des Filters 1 befindet sich ein Partikelfilter 8.

Die Ummantelung 9 wird in einer bevorzugten Ausgestaltung aus einem endlosen Schlauch 19 aus einem der oben genannten verformbaren Materialien hergestellt. Figur 7 und Figur 8 veranschaulichen, wie dieser Schlauch 19 aus flüssigem Kunststoff 24 hergestellt wird. Eine bevorzugte Vorrichtung zur Herstellung des Schlauchs 19 umfasst folgende Bestandteile:
- eine Matrize 21 mit einem runden Dorn 25 und mindestens einem Steg 23,
- ein Klebewerkzeug 22 und
- ein nicht gezeigtes Vorschubwerkzeug.

Die Matrize 21 erstreckt sich in einer Ebene, die senkrecht auf der Zeichenebene von Figur 7 steht und in der Zeichenebene von Figur 8 liegt. Figur 8 zeigt die Matrize 21 in der Ebene B - B von Figur 5. Die Matrize 21 weist eine kreisförmige Aussparung auf. Der Steg 23 oder die Stege halten den runden Dorn 25 in der Mitte dieser kreisförmigen Aussparung, sodass die Matrize 21 insgesamt eine Aussparung in Form eines Kreisrings (Torus) bereitstellt.

Das Vorschubwerkzeug presst flüssigen Kunststoff 24 durch diese Aussparung in Form eines Kreisrings. Bevorzugt wurde dieser Kunststoff 24 zuvor chemisch und / oder physikalisch mit Treibgasen versetzt. In Figur 7 wird durch Pfeile PR angedeutet, in welche Richtung das Vorschubwerkzeug den flüssigen Kunststoff 24 durch die Matrize 21 presst. Dadurch wird ein endloser Schlauch erzeugt, der aushärtet und durch das Aushärten zu dem Schlauch 19 aus dem verformbaren Material wird. Das Klebewerkzeug 22 verschließt den oder jeden Schlitz in diesem Schlauch, den der Steg 23 erzeugt.

Figur 9 veranschaulicht schematisch eine mögliche Realisierungsform, wie die Ummantelung 9 unter Verwendung des endlosen Schlauchs 19 hergestellt wird. Das bevorzugte Herstellungsverfahren umfasst die folgenden Schritte:
- Ein schematisch gezeigtes Schneidwerkzeug mit einer Schneide 20 schneidet von dem Schlauch 19 ein Stück ab. Die Länge dieses Schlauchstücks ist bevorzugt gleich der Länge des Filters 1, also gleich dem Abstand zwischen den beiden Stirnflächen Sf.e, Sf.a des Filters 1. Das abgeschnittene Schlauchstück kann auch länger als der Filter 1 sein.
- Dieses Schlauchstück wird so über den Filter 1 gezogen, dass die Innenwand des Schlauchstücks über die Mantelfläche M des lösbar gehaltenen Filters 1 gleitet. Möglich ist auch, dass der Filter 1 in das Schlauchstück hineingeschoben wird. In beiden Fällen wird das Schlauchstück in eine Vorschubrichtung VR relativ zu dem Filter 1 bewegt.
- In beiden Fällen bildet das abgeschnittene Schlauchstück nach der Relativbewegung die Ummantelung 9. Nach der Relativbewegung ist die Mantelfläche M des Filters 1 vollständig von der Ummantelung 9 umgeben. Der Deckel 2 mit dem Gewinde 5 wird stoffschlüssig mit einer Stirnfläche dieser Ummantelung 9 verbunden, der Griffschutz 6 mit der anderen Stirnfläche.

In einer Abwandlung wird zunächst der Schlauch 19 über den Filter 1 gezogen oder der Filter 1 in den Schlauch 19 hineingeschoben, wobei die Innenwand des Schlauchs 19 über die Mantelfläche M des Filters 1 gleitet. Anschließend wird dasjenige Stück des Schlauchs 19, welches die Mantelfläche M umgibt, mittels der Schneide 20 vom Rest des Schlauchs 19 abgeschnitten.

Möglich ist, dass der Schlauch 19 oder das abgeschnittene Schlauchstück erwärmt werden und sich dadurch ausdehnen. Der Filter 1 wird in den ausgedehnten Schlauch 19 oder das ausgedehnte abgeschnittene Schlauchstück geschoben. Der Schlauch 19 oder Schaustück ziehen sich wieder zusammen und halten den Filter 1 fest.

In einer weiteren Abwandlung wird das Werkstück umfassend den starren Filter 1 und das abgeschnittene Schlauchstück in ein starres Gehäuse 7 geschoben, oder das starre Gehäuse 7 wird über dieses Werkstück gezogen. Anschließend wird der Deckel 2 mit dem Gewinde 5 stoffschlüssig mit dem starren Gehäuse 7 verbunden.

### Bezugszeichenliste

| | |
|---|---|
| 1 | Filter aus Aktivkohle (Monolith), hat die Form eines Zylinders mit einer Mantelfläche M und zwei Stirnflächen Sf.e, Sf.a, ist von parallelen Kanälen durchgezogen |
| 2 | Deckel der Filtereinheit 100, mit dem starren Gehäuse 7 oder den Partikelschaum 3 oder dem Schlauchstück 9 stoffschlüssig verbunden |
| 3 | Ummantelung in Form von ausgehärtetem Granulat 13, umgibt die Mantelfläche M des Filters 1, kann über die einströmseitige Stirnfläche Sf.e überstehen, aus dem Granulat 13 erzeugt, von dem starren Gehäuse 7 umgeben |
| 4 | optionale Flammschutzfolie, außen auf das starre Gehäuse 7 oder auf die Ummantelung 3, 9 aufgeklebt |
| 5 | Gewinde, fest mit dem Deckel 2 verbunden |
| 6 | Griffschutz vor der einströmseitigen Öffnung Ö.e |
| 7 | starres Gehäuse, hat die Form eines Zylinders, umgibt die Ummantelung 3, 9 |
| 8 | optionaler Partikelfilter aus Papier vor der einströmseitigen Stirnfläche Sf.e, befindet sich zwischen dem Filter 1 und dem Griffschutz 6 |
| 9 | Ummantelung aus einem verformbaren Material, insbesondere aus thermoplastischem Schaumstoff oder Elastomer, umgibt die Mantelfläche M des Filters 1, wird aus dem Schlauch 19 erzeugt, wobei die Schneide 20 ein Stück vom Schlauch 9 abschneidet |
| 10 | formgebender Körper (Urform) in Form eines Topfs, definiert einen zylinderförmigen Hohlraum zur Aufnahme des Filters 1 |
| 11 | Deckel für den formgebenden Körper 10 |
| 12.1, ... | Düsen, welche heißen Dampf in das Innere des Topfs 10 hinein ausstoßen |
| 13 | Granulat, welches in das starre Gehäuse 7 oder in den formgebenden Körper 10 eingefüllt wird und dann die Mantelfläche M des Filters 1 umgibt, fungiert als das fließfähige Material |
| 14 | scheibenförmiger Vorsprung am Boden des formgebenden Körpers 10, welche die einströmseitige Öffnung Ö.e erzeugt, schiebt den ummantelten Filter 1 aus dem Körper 10 heraus |
| 15 | scheibenförmiger Platzhalter für die einströmseitige Öffnung in der Ummantelung 3, bei der Herstellung am Boden des Gehäuses 7 angeordnet |
| 19 | endloser Schlauch aus thermoplastischem Schaumstoff, von dem die Ummantelung 9 abgeschnitten wird |
| 20 | Schneide, welche die Ummantelung 9 von dem Schlauch 19 abschneidet |
| 21 | Matrize, durch welche hindurch flüssiger Kunststoff 24 gepresst wird, um den Schlauch 19 zu erzeugen, umfasst den Dorn 25 und den Steg 23 |
| 22 | Klebewerkzeug, welche den Schlauch 19 verschließt |
| 23 | Steg in der Matrize 21, hält den Dorn 25 |
| 24 | flüssiger Kunststoff, aus dem der Schlauch 19 hergestellt wird, optional mit Treibgasen versetzt |
| 25 | Dorn in der Matrize 21, von dem Steg 23 gehalten |
| 26 | Schneidwerkzeug, welches Granulat 13 abschneidet, das nach dem Aushärten über den Topf 10 übersteht |
| 100 | Filtereinheit, umfasst den Filter 1, den Deckel 2, das Gewinde 5 und den Griffschutz 6 sowie die Ummantelung 3 aus ausgehärtetem Granulat (Granulat-Ausführungsbeispiel) oder die Ummantelung 9 aus Schaumstoff oder Gummi (Schaumstoff-Ausführungsbeispiel) |
| L | Richtung, in welche eingesogene Atemluft die Filtereinheit 100 durchströmt |
| M | Mantelfläche des zylinderförmigen Filters 1, von der Ummantelung 3, 9 umgeben |
| MA | Mittelachse des zylinderförmigen Filters 1 |
| Ö.a | ausströmseitige Öffnung, im Deckel 2 angeordnet |
| Ö.e | einströmseitige Öffnung, durch den Griffschutz 6 geschützt |
| PR | Richtung, in welche das Vorschubwerkzeug den flüssigen Kunststoff 24 durch die Matrize 21 hindurchpresst |
| S | Richtung, in welche der Stempel mit dem Vorsprung 13 den ummantelten Filter 1 aus dem formgebenden Körper 10 hinausschiebt |
| Sf.a | ausströmseitige Stirnfläche des zylinderförmigen Filters 1, steht senkrecht auf der Mittelachse MA |
| Sf.e | einströmseitige Stirnfläche des zylinderförmigen Filters 1, steht senkrecht auf der Mittelachse MA |
| Sp | Spalt zwischen der Innenwand des starren Gehäuses 7 oder der Mantelfläche M des formgebenden Körpers 10 und der Mantelfläche M des Filters 1 im Gehäuse 7 / Körper 10, wird mit Granulat 13 angefüllt |
| VR | Vorschubrichtung, in welche der Schlauch 19 relativ zum Filter 1 bewegt wird, um die Ummantelung 9 zu erzeugen |

## Patentansprüche

1. Filtereinheit (100) umfassend
- einen Filter (1),
- eine Ummantelung (3, 9) aus einem elastisch verformbaren Material und
- eine Abdeckung (2, 5) aus einem starren Material,
wobei die Filtereinheit (100)
- eine Einströmseite mit einer einströmseitigen Öffnung (Ö.e) und
- eine Ausströmseite mit einer ausströmseitigen Öffnung (Ö.a) aufweist,
wobei die ausströmseitige Öffnung (Ö.a) in die Abdeckung (2, 5) eingelassen ist,
wobei die Filtereinheit (100) so ausgestaltet ist, dass ein Gasgemisch von der Einströmseite durch die einströmseitigen Öffnung (Ö.e), den Filter (1) und die ausströmseitige Öffnung (Ö.a) hindurch zur Ausströmseite fließen kann,
wobei die Abdeckung (2, 5) an dem zur Ausströmseite hin zeigenden Ende der Ummantelung (3, 9) an die Ummantelung (3, 9) angrenzt,
wobei der Filter (1)
- als ein starrer Körper ausgestaltet ist,
- sich entlang einer Mittelachse (MA) erstreckt,
- eine Mantelfläche (M) aufweist, welche die Mittelachse (MA) umgibt, und
- dazu ausgestaltet ist, mindestens ein Gas und / oder Partikel aus einem Gasgemisch, welches durch den Filter (1) fließt, insbesondere aus Atemluft, herauszufiltern, und
wobei die Ummantelung (3, 9)
- die Mantelfläche (M) des Filters (1) umgibt,
- an der Mantelfläche (M) des Filters (1) stoffschlüssig mit dem Filter (1) verbunden ist und
- dazu ausgestaltet ist, kinetische Energie aufzunehmen, welche auf die Mantelfläche (M) einwirkt.

2. Filtereinheit (100) nach Anspruch 1,
**dadurch gekennzeichnet, dass**
die Ummantelung (3, 9) eine federnde Wirkung hat.

3. Filtereinheit (100) nach einem der vorhergehenden Ansprüche,
**dadurch gekennzeichnet, dass**
die Härte der Ummantelung (3, 9) in eine Richtung auf die Mittelachse (MA) des Filters (1) abnimmt und / oder
die Elastizität der Ummantelung (3,9) in eine Richtung auf die Mittelachse (MA) des Filters (1) zunimmt.

4. Filtereinheit (100) nach einem der vorhergehenden Ansprüche,
**dadurch gekennzeichnet, dass**
die Ummantelung (3, 9) eine Dicke von mindestens 0,1 cm, bevorzugt von mindestens 0,5 cm, insbesondere von mindestens 1 cm, und
bevorzugt von höchstens 1,5 cm, besonders bevorzugt von höchstens 0,5 cm, aufweist.

5. Filtereinheit (100) nach einem der vorhergehenden Ansprüche,
**dadurch gekennzeichnet, dass**
der als ein starrer Körper ausgestaltete Filter (1) eine einströmseitige Stirnfläche (Sf.e) und eine ausströmseitige Stirnfläche (Sf.a) aufweist,
wobei die Ummantelung (3, 9)
- über die einströmseitige Stirnfläche (Sf.e) übersteht und
- die einströmseitige Öffnung (Ö.e) umgibt.

6. Filtereinheit (100) nach Anspruch 5,
**dadurch gekennzeichnet, dass**
die Ummantelung (3, 9) einen Bereich der einströmseitigen Stirnfläche (Sf.e) des Filters (1) bedeckt.

7. Filtereinheit (100) nach einem der vorhergehenden Ansprüche,
**dadurch gekennzeichnet, dass**
die Abdeckung (2, 5) an dem zur Ausströmseite hin zeigenden Ende der Ummantelung (3, 9) mit der Ummantelung (3, 9) verbunden ist.

8. Filtereinheit (100) nach einem der vorhergehenden Ansprüche,
**dadurch gekennzeichnet, dass**
die Filtereinheit (100) ein starres Gehäuse (7) umfasst,
wobei die Ummantelung (3, 9) sich zwischen der Mantelfläche (M) des Filters (1) und dem starren Gehäuse (7) befindet und
wobei die Abdeckung (2, 5) mit dem starren Gehäuse (7) mechanisch verbunden ist,
bevorzugt an einem zur Ausströmseite hin zeigenden Ende des starren Gehäuses (7).

9. Filtereinheit (100) nach einem der vorhergehenden Ansprüche,
**dadurch gekennzeichnet, dass**
die Filtereinheit (100) eine Folie (4) umfasst,
wobei die Folie (4) die vom Filter (1) abgewandte Außenseite der Ummantelung (3, 9) oder eine nach außen zeigende Oberfläche des starren Gehäuses (7) umgibt.

10. Filtereinheit (100) nach einem der vorhergehenden Ansprüche,
**dadurch gekennzeichnet, dass**
die Filtereinheit (100) einen Griffschutz (6) vor der einströmseitigen Öffnung (Ö.e) umfasst,
wobei der Griffschutz (6) mit der Ummantelung (3, 9) oder mit dem starren Gehäuse (7) verbunden ist.

11. Verwendung einer Filtereinheit (100) nach einem der vorhergehenden Ansprüche
als Bestandteil eines Atemschutzgeräts, insbesondere einer Atemschutzmaske,
zum Herausfiltern von mindestens einem Gas und / oder Partikeln aus Atem luft.

12. Atemschutzgerät mit mindestens einer Filtereinheit (100) nach einem der Ansprüche 1 bis 10.

13. Verfahren zum Herstellen einer Filtereinheit (100),
wobei das Verfahren unter Verwendung eines formgebenden Körpers (7, 10, 11) durchgeführt wird,
wobei der formgebende Körper (7, 10, 11) einen Hohlraum bereitstellt und wobei das Verfahren die Schritte umfasst, dass
ein Filter (1) bereitgestellt wird, welcher
- als ein starrer Körper ausgestaltet ist,
- sich entlang einer Mittelachse (MA) erstreckt,
- eine Mantelfläche (M), welche die Mittelachse (MA) umgibt, sowie eine einströmseitige Stirnfläche (Sf.e) und eine ausströmseitige Stirnfläche (Sf.a) aufweist und
- dazu ausgestaltet ist, mindestens ein Gas und / oder Partikel aus einem Gasgemisch, welches durch den Filter (1) fließt, insbesondere aus Atemluft, herauszufiltern,
eine Abdeckung (2, 5) aus einem starren Material bereitgestellt wird,
der Filter (1) dergestalt in den vom formgebenden Körper (7, 10) bereitgestellten Hohlraum verbracht wird,
dass zwischen der Mantelfläche (M) des Filters (1) und einer umlaufenden Innenwand des formgebenden Körpers (7, 10, 11) ein Spalt (Sp) auftritt,
wobei bevorzugt der Hohlraum die gesamte Mantelfläche (M) umgibt,
ein fließfähiges Material (13), insbesondere ein Schüttgut, dergestalt in den Spalt (Sp) verbracht wird, dass das fließfähige Material (13) im Spalt (Sp) die Mantelfläche (M) des Filters (1) umgibt,
das fließfähige Material (13) im Spalt (Sp) aushärtet, sodass das fließfähige Material (13) sich stoffschlüssig mit der Mantelfläche (M) des Filters verbindet,
das ausgehärtete Material (13) eine Ummantelung (3) aus einem nachgiebigen Material bildet, welche die Mantelfläche (M) des Filters (1) vollständig umgibt und an den beiden Stirnflächen (Sf.e, Sf.a) des Filters (1) jeweils eine Öffnung (Ö.a, Ö.e) freilässt,
die Abdeckung (2, 5) dergestalt mit dem nach dem Aushärten entstandenen Werkstück mechanisch verbunden wird,
dass die ausströmseitige Stirnfläche (Sf.a) des Filters (1) zur Abdeckung (2, 5) hin zeigt,
wobei der Filter (1), die Ummantelung (3) um die Mantelfläche (M) des Filters (1) und die verbundene Abdeckung (2, 5) zusammen zu der hergestellten Filtereinheit (100) gehören.

14. Verfahren nach Anspruch 13,
**dadurch gekennzeichnet, dass**
ein starres Gehäuse (7) bereitgestellt wird,
wobei das starre Gehäuse (7) als der formgebende Körper (7, 10, 11) oder als ein Teil des formgebenden Körpers (7, 10, 11) verwendet wird,
wobei der Spalt (Sp), in den das fließfähige Material (13) verbracht wird, zwischen der Mantelfläche (M) des Filters (1) und der Innenwand des starren Gehäuses (7) auftritt,
wobei die Ummantelung (3), welche nach dem Aushärten des fließfähigen Materials (13) gebildet wird, sich zwischen der Mantelfläche (M) des Filters (1) und der Innenwand des starren Gehäuses (7) befindet und
wobei der Schritt, die Abdeckung (2, 5) mit dem Werkstück zu verbinden, den Schritt umfasst, dass die Abdeckung (2, 5) mechanisch mit dem starren Gehäuse (7) verbunden wird.

15. Verfahren nach Anspruch 13,
**dadurch gekennzeichnet, dass**
nach dem Aushärten des fließfähigen Materials (13) das Werkstück umfassend den Filter (1) und die Ummantelung (3) aus dem formgebenden Körper (10, 11) herausgeschoben wird und
der Schritt, die Abdeckung (2, 5) mit dem Werkstück zu verbinden, den Schritt umfasst, dass die Abdeckung (2, 5) mit der Ummantelung (3) verbunden wird, bevorzugt stoffschlüssig verbunden wird

## Claims

1. Filter unit (100) comprising
- a filter (1),
- a casing (3, 9) made of an elastically deformable material and
- a cover (2, 5) made of a rigid material,
wherein the filter unit (100) comprises
- an inflow side having an inflow-side opening (Ö.e) and
- an outflow side having an outflow-side opening (Ö.a),
wherein the outflow-side opening (Ö.a) is recessed in the cover (2, 5),
wherein the filter unit (100) is designed such that a gas mixture can flow from the inflow side through the inflow-side opening (Ö.e), the filter (1) and the outflow opening (Ö.a) to the outflow side,
wherein the cover (2, 5) adjoins the casing (3, 9) at the end of the casing (3, 9) facing the outflow side,
wherein the filter (1)
- is designed as a rigid body,
- extends along a central axis (MA),
- has a lateral surface (M) which surrounds the central axis (MA), and
- is designed to filter out at least one gas and/or particles from a gas mixture flowing through the filter (1), in particular from breathing air, and
wherein the casing (3, 9)
- surrounds the lateral surface (M) of the filter (1),
- is integrally bonded to the filter (1) on the lateral surface (M) of the filter (1) and
- is designed to absorb kinetic energy acting on the lateral surface (M).

2. Filter unit (100) according to claim 1,
**characterized in that**
the casing (3, 9) has a resilient effect.

3. Filter unit (100) according to any of the preceding claims,
**characterized in that**
the hardness of the casing (3, 9) decreases in a direction towards the central axis (MA) of the filter (1) and/or
the elasticity of the casing (3,9) increases in a direction towards the central axis (MA) of the filter (1).

4. Filter unit (100) according to any of the preceding claims,
**characterized in that**
the casing (3, 9) has a thickness of at least 0.1 cm, preferably of at least 0.5 cm, in particular of at least 1 cm, and
preferably of at most 1.5 cm, particularly preferably of at most 0.5 cm.

5. Filter unit (100) according to any of the preceding claims,
**characterized in that**
the filter (1) designed as a rigid body has an inflow-side end face (Sf.e) and an outflow-side end face (Sf.a),
wherein the casing (3, 9)
- protrudes beyond the inflow-side end face (Sf.e) and
- surrounds the inflow-side opening (Ö.e).

6. Filter unit (100) according to claim 5,
**characterized in that**
the casing (3, 9) covers a region of the inflow-side end face (Sf.e) of the filter (1).

7. Filter unit (100) according to any of the preceding claims,
**characterized in that**
the cover (2, 5) is connected to the casing (3, 9) at the end of the casing (3, 9) facing the outflow side.

8. Filter unit (100) according to any of the preceding claims,
**characterized in that**
the filter unit (100) comprises a rigid housing (7),
wherein the casing (3, 9) is located between the lateral surface (M) of the filter (1) and the rigid housing (7) and
wherein the cover (2, 5) is mechanically connected to the rigid housing (7),
preferably at an end of the rigid housing (7) facing the outflow side.

9. Filter unit (100) according to any of the preceding claims,
**characterized in that**
the filter unit (100) comprises a film (4),
wherein the film (4) surrounds the outer side of the casing (3, 9) facing away from the filter (1) or an outward-facing surface of the rigid housing (7).

10. Filter unit (100) according to any of the preceding claims,
**characterized in that**
the filter unit (100) comprises a grip guard (6) in front of the inflow-side opening (Ö.e),
wherein the grip guard (6) is connected to the casing (3, 9) or to the rigid housing (7).

11. Use of a filter unit (100) according to any of the preceding claims as a component of a breathing apparatus, in particular a breathing mask, for filtering out at least one gas and/or particles from breathing air.

12. Breathing apparatus comprising at least one filter unit (100) according to any of claims 1 to 10.

13. Method for producing a filter unit (100),
wherein the method is carried out using a shaping body (7, 10, 11),
wherein the shaping body (7, 10, 11) provides a cavity and
wherein the method comprises the steps whereby
a filter (1) is provided, which
- is designed as a rigid body,
- extends along a central axis (MA),
- has a lateral surface (M) which surrounds the central axis (MA), as well as an inflow-side end face (Sf.e) and an outflow-side end face (Sf.a) and
- is designed to filter out at least one gas and/or particles from a gas mixture flowing through the filter (1), in particular from breathing air,
a cover (2, 5) made of a rigid material is provided,
the filter (1) is placed into the cavity provided by the shaping body (7, 10) in such a way
that a gap (Sp) occurs between the lateral surface (M) of the filter (1) and a circumferential inner wall of the shaping body (7, 10, 11),
wherein the cavity preferably surrounds the entire lateral surface (M),
a flowable material (13), in particular a bulk material, is introduced into the gap (Sp) in such a way that the flowable material (13) in the gap (Sp) surrounds the lateral surface (M) of the filter (1),
the flowable material (13) hardens in the gap (Sp) so that the flowable material (13) integrally bonds to the lateral surface (M) of the filter,
the hardened material (13) forms a casing (3) made of a flexible material, which completely surrounds the lateral surface (M) of the filter (1) and leaves an opening (Ö.a, Ö.e) free on each of the two end faces (Sf.e, Sf.a) of the filter (1),
the cover (2, 5) is mechanically connected to the workpiece created after hardening in such a way
that the outflow-side end face (Sf.a) of the filter (1) faces the cover (2, 5),
wherein the filter (1), the casing (3) around the lateral surface (M) of the filter (1) and the connected cover (2, 5) jointly belong to the produced filter unit (100).

14. Method according to claim 13,
**characterized in that**
a rigid housing (7) is provided,
wherein the rigid housing (7) is used as the shaping body (7, 10, 11) or as a part of the shaping body (7, 10, 11),
wherein the gap (Sp) into which the flowable material (13) is introduced occurs between the lateral surface (M) of the filter (1) and the inner wall of the rigid housing (7),
wherein the casing (3), which is formed after the hardening of the flowable material (13), is located between the lateral surface (M) of the filter (1) and the inner wall of the rigid housing (7) and
wherein the step of connecting the cover (2, 5) to the workpiece comprises the step of mechanically connecting the cover (2, 5) to the rigid housing (7).

15. Method according to claim 13,
**characterized in that**
after the flowable material (13) has hardened, the workpiece comprising the filter (1) and the casing (3) is pushed out of the shaping body (10, 11) and
the step of connecting the cover (2, 5) to the workpiece comprises the step of connecting the cover (2, 5) to the casing (3), preferably by means of an integral bond

## Revendications

1. Unité de filtrage (100), comprenant
- un filtre (1),
- un enrobage (3, 9) en un matériau élastiquement déformable, et
- un élément de recouvrement (2, 5) en un matériau rigide,
dans laquelle l'unité de filtrage (100) présente
- un côté entrée comportant une ouverture côté entrée (Ö.e) et
- un côté sortie comportant une ouverture côté sortie (Ö.a)
dans laquelle l'ouverture côté sortie (Ö.a) est encastrée dans l'élément de recouvrement (2, 5),
dans laquelle l'unité de filtrage (100) est conçue de sorte qu'un mélange de gaz peut s'écouler du côté entrée vers le côté sortie en passant par l'ouverture côté entrée (Ö.e), le filtre (1) et l'ouverture côté sortie (Ö.a),
dans laquelle l'élément de recouvrement (2, 5) est adjacent à l'enrobage (3, 9) au niveau de l'extrémité de l'enrobage (3, 9) orientée vers le côté sortie,
dans laquelle le filtre (1)
- est conçu sous forme de corps rigide,
- s'étend le long d'un axe central (MA),
- présente une surface formant enveloppe (M) qui entoure l'axe central (MA), et
- est conçu pour filtrer au moins un gaz et/ou des particules d'un mélange de gaz qui s'écoule à travers le filtre (1), en particulier de l'air respirable, et
dans laquelle l'enrobage (3, 9)
- entoure la surface formant enveloppe (M) du filtre (1),
- est relié au filtre (1) par une liaison de matière sur la surface formant enveloppe (M) du filtre (1) et
- est conçu pour absorber l'énergie cinétique qui agit sur la surface formant enveloppe (M).

2. Unité de filtrage (100) selon la revendication 1,
**caractérisée en ce que**
l'enrobage (3, 9) possède un effet élastique.

3. Unité de filtrage (100) selon l'une des revendications précédentes,
**caractérisée en ce que**
la dureté de l'enrobage (3, 9) diminue dans une direction vers l'axe central (MA) du filtre (1) et/ou
l'élasticité de l'enrobage (3, 9) augmente dans une direction vers l'axe central (MA) du filtre (1).

4. Unité de filtrage (100) selon l'une des revendications précédentes,
**caractérisée en ce que**
l'enrobage (3, 9) présente une épaisseur d'au moins 0,1 cm, de préférence d'au moins 0,5 cm, en particulier d'au moins 1 cm, et
de préférence de 1,5 cm au maximum, de manière encore plus préférée de 0,5 cm au maximum.

5. Unité de filtrage (100) selon l'une des revendications précédentes,
**caractérisée en ce que**
le filtre (1) conçu sous forme de corps rigide présente une surface frontale côté entrée (Sf.e) et une surface frontale côté sortie (Sf.a),
dans laquelle l'enrobage (3, 9)
- dépasse la surface frontale côté entrée (Sf.e) et
- entoure l'ouverture côté entrée (Ö.e).

6. Unité de filtrage (100) selon la revendication 5,
**caractérisée en ce que**
l'enrobage (3, 9) recouvre une zone de la surface frontale côté entrée (Sf.e) du filtre (1).

7. Unité de filtrage (100) selon l'une des revendications précédentes,
**caractérisée en ce que**
l'élément de recouvrement (2, 5) est relié à l'enrobage (3, 9) au niveau de l'extrémité de l'enrobage (3, 9) orientée vers le côté sortie.

8. Unité de filtrage (100) selon l'une des revendications précédentes,
**caractérisée en ce que**
l'unité de filtrage (100) comprend un boîtier rigide (7),
dans laquelle l'enrobage (3, 9) est situé entre la surface formant enveloppe (M) du filtre (1) et le boîtier rigide (7), et
dans laquelle l'élément de recouvrement (2, 5) est relié mécaniquement au boîtier rigide (7),
de préférence au niveau d'une extrémité du boîtier rigide (7) orientée vers le côté sortie.

9. Unité de filtrage (100) selon l'une des revendications précédentes,
**caractérisée en ce que**
l'unité de filtrage (100) comprend une feuille (4),
dans laquelle la feuille (4) entoure le côté extérieur de l'enrobage (3, 9) opposé au filtre (1) ou une surface du boîtier rigide (7) orientée vers l'extérieur.

10. Unité de filtrage (100) selon l'une des revendications précédentes,
**caractérisée en ce que**
l'unité de filtrage (100) comprend une protection de saisie (6) devant l'ouverture côté entrée (Ö.e),
dans laquelle la protection de saisie (6) est reliée à l'enrobage (3, 9) ou au boîtier rigide (7).

11. Utilisation d'une unité de filtrage (100) selon l'une des revendications précédentes
en tant que partie intégrante d'un appareil de protection respiratoire, en particulier d'un masque de protection respiratoire,
pour le filtrage d'au moins un gaz et/ou de particules de l'air respirable.

12. Appareil de protection respiratoire comportant au moins une unité de filtrage (100) selon l'une des revendications 1 à 10.

13. Procédé de fabrication d'une unité de filtrage (100),
dans lequel le procédé est mis en œuvre à l'aide d'un corps donnant forme (7, 10, 11),
dans lequel le corps donnant forme (7, 10, 11) fournit une cavité et
dans lequel le procédé comprend les étapes selon lesquelles
un filtre (1) est fourni, lequel
- est conçu sous forme de corps rigide,
- s'étend le long d'un axe central (MA),
- présente une surface formant enveloppe (M) qui entoure l'axe central (MA), ainsi qu'une surface frontale côté entrée (Sf.e) et une surface frontale côté sortie (Sf.a), et
- est conçu pour filtrer au moins un gaz et/ou des particules d'un mélange de gaz qui s'écoule à travers le filtre (1), en particulier de l'air respirable,
un élément de recouvrement (2, 5) en un matériau rigide est fourni,
le filtre (1) est placé dans la cavité fournie par le corps donnant forme (7, 10) de telle sorte
qu'un interstice (Sp) apparaît entre la surface formant enveloppe (M) du filtre (1) et une paroi intérieure circonférentielle du corps donnant forme (7, 10, 11),
dans lequel, de préférence, la cavité entoure toute la surface formant enveloppe (M),
un matériau fluide (13), en particulier un produit en vrac, est amené dans l'interstice (Sp) de telle sorte que le matériau fluide (13) dans l'interstice (Sp) entoure la surface formant enveloppe (M) du filtre (1),
le matériau fluide (13) durcit dans l'interstice (Sp), de sorte que le matériau fluide (13) se lie par matière à la surface formant enveloppe (M) du filtre,
le matériau durci (13) forme un enrobage (3) en un matériau souple qui entoure complètement la surface formant enveloppe (M) du filtre (1) et libère respectivement une ouverture (Ö.a, Ö.e) sur les deux surfaces frontales (Sf.e, Sf.a) du filtre (1),
l'élément de recouvrement (2, 5) est relié mécaniquement à la pièce obtenue après le durcissement de telle sorte
que la surface frontale côté sortie (Sf.a) du filtre (1) est orientée vers l'élément de recouvrement (2, 5),
dans lequel le filtre (1), l'enrobage (3) autour de la surface formant enveloppe (M) du filtre (1) et l'élément de recouvrement (2, 5) relié appartiennent conjointement à l'unité de filtrage (100) fabriquée.

14. Procédé selon la revendication 13,
**caractérisé en ce que**
un boîtier rigide (7) est fourni,
dans lequel le boîtier rigide (7) est utilisé comme corps donnant forme (7, 10, 11) ou comme partie du corps donnant forme (7, 10, 11),
dans lequel l'interstice (Sp) dans lequel le matériau fluide (13) est placé apparait entre la surface formant enveloppe (M) du filtre (1) et la paroi intérieure du boîtier rigide (7),
dans lequel l'enrobage (3), qui est formé après le durcissement du matériau fluide (13), est situé entre la surface formant enveloppe (M) du filtre (1) et la paroi intérieure du boîtier rigide (7) et
dans lequel l'étape consistant à relier l'élément de recouvrement (2, 5) à la pièce comprend l'étape consistant à relier mécaniquement l'élément de recouvrement (2, 5) au boîtier rigide (7).

15. Procédé selon la revendication 13,
**caractérisé en ce que**
après le durcissement du matériau fluide (13), la pièce comprenant le filtre (1) et l'enrobage (3) est poussée hors du corps donnant forme (10, 11), et
l'étape consistant à relier l'élément de recouvrement (2, 5) à la pièce comprend l'étape consistant à relier l'élément de recouvrement (2, 5) à l'enrobage (3), de préférence par liaison de matière.
